(19)

Europäisches
Patentamt
European
Patent Office
Office européen
des brevets

(11)    **EP 2 478 644 B1**

(12)    **EUROPEAN PATENT SPECIFICATION**

(45) Date of publication and mention
of the grant of the patent:
**15.04.2015 Bulletin 2015/16**

(21) Application number: **10826119.9**

(22) Date of filing: **02.11.2010**

(51) Int Cl.:
*H04B 7/04* (2006.01)        *H04B 7/06* (2006.01)
*H04L 1/00* (2006.01)

(86) International application number:
**PCT/CN2010/078318**

(87) International publication number:
**WO 2011/050756 (05.05.2011 Gazette 2011/18)**

(54) **SYSTEM AND METHOD FOR WIRELESS COMMUNICATIONS WITH ADAPTIVE CODEBOOKS**

SYSTEM UND VERFAHREN FÜR DRAHTLOSE KOMMUNIKATION MIT ADAPTIVEN
CODEBÜCHERN

SYSTÈME ET PROCÉDÉ DE COMMUNICATION SANS FIL AVEC LIVRES DE CODE ADAPTATIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2009   US 257292 P
11.01.2010   US 293969 P
05.05.2010   US 331584 P
28.10.2010   US 914794**

(43) Date of publication of application:
**25.07.2012   Bulletin 2012/30**

(73) Proprietor: **Huawei Technologies Co., Ltd.
Longgang District
Shenzhen, Guangdong 518129 (CN)**

(72) Inventors:
• **XIA, Pengfei
San Diego
California 92131 (US)**
• **TANG, Yang
San Diego
California 92121 (US)**
• **CHEN, Linhong
Rolling Meadows
Illinois 60008 (US)**
• **RONG, Zhigang
San Diego
California 92128 (US)**

(74) Representative: **Körber, Martin Hans et al
Mitscherlich PartmbB
Patent- und Rechtsanwälte
Sonnenstrasse 33
80331 München (DE)**

(56) References cited:
**EP-A2- 1 944 883        WO-A2-2009/131376
CN-A- 101 232 475        KR-B1- 100 912 226**

• **HUAWEI: "Adaptive Codebook Designs for DL
MIMO", 3GPP DRAFT; R1-09XXXX-ADAPTIVE-
CODEBOOK-DESIGNS-FOR-DL -MIMO, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. San Francisco, USA;
20090428, 28 April 2009 (2009-04-28),
XP050339700, [retrieved on 2009-04-28]**
• **LEUS G ET AL: "Quantized feedback and
feedback reduction for precoded spatial
multiplexing MIMO systems", SIGNAL
PROCESSING AND ITS APPLICATIONS, 2007.
ISSPA 2007. 9TH INTERNATIONAL SYMPOSIUM
ON, IEEE, PISCATAWAY, NJ, USA, 12 February
2007 (2007-02-12), pages 1-6, XP031280781,
ISBN: 978-1-4244-0778-1**

**Description**

TECHNICAL FIELD

The present invention relates generally to wireless communications, and more particularly to a system and method for wireless communications with adaptive codebooks.

BACKGROUND

In a wireless communications system, the communications system's capacity may be significantly improved when a transmitter (also referred to as a base station (BS), NodeB, enhanced NodeB (eNB), and so on) has full or partial knowledge of a channel over which it will be transmitting. Information related to the channel may be referred to as channel state information (CSI). CSI may be obtained by the transmitter over a reverse feedback channel. A receiver (also referred to as a mobile station (MS), user equipment (UE), user, subscriber, and so forth) of transmissions made by the transmitter may transmit CSI back to the transmitter over the reverse feedback channel.

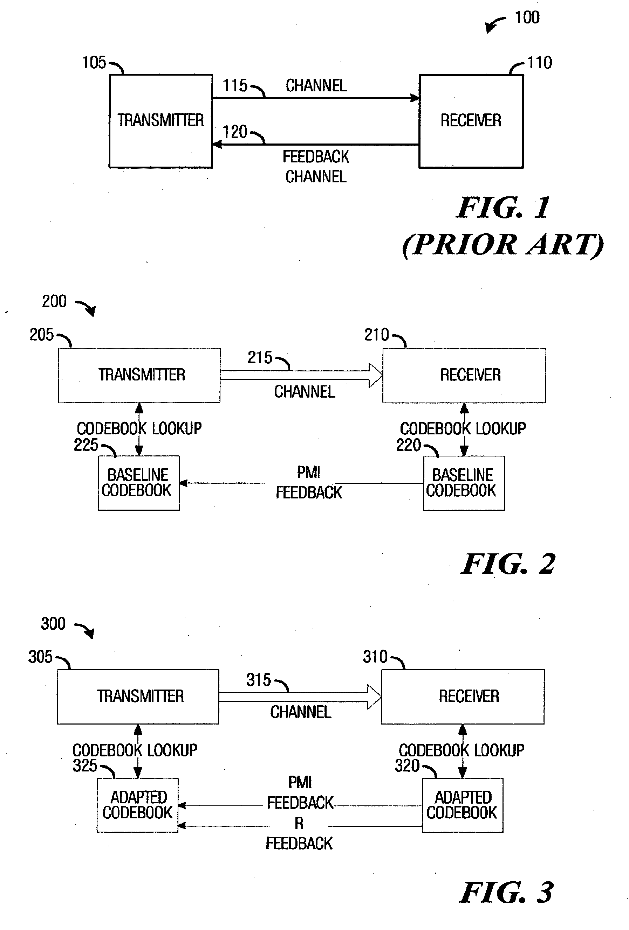

Figure 1 illustrates a portion of a prior art wireless communications system 100. Wireless communications system 100 includes a transmitter 105 and a receiver 110. Transmissions from transmitter 105 to receiver 110 occur over channel 115. Receiver 110 estimates channel 115 and provides information regarding channel 115 to transmitter 105, such as CSI discussed above. Receiver 110 may utilize feedback channel 120 to transmit the information regarding channel 115, such as CSI, to transmitter 105.

Transmit precoding/beamforming with limited feedback has been studied extensively and demonstrates significant performance gain in single user multiple input, multiple output (SU-MIMO). In general, a precoding codebook needs to be designed and maintained at both transmitter and receiver in order facilitate the operation of limited feedback transmit precoding. The precoding codebook may be a collection of candidate precoding matrices and vectors and may serve as a common dictionary of current channel conditions to the transmitter and receiver.

Precoded matrix indicator (PMI) feedback has been used in the Third Generation Partnership Project (3GPP) Long Term Evolution (LTE) Release-8 (Rel. 8) to facilitate closed loop transmit beamforming/precoding with a finite number of feedback bits. However, codebook size limitations in Rel. 8 have made further performance enhancements difficult due to the quantization noise. Adaptive codebook may be used to improve the PMI feedback quality in LTE-Advanced (LTE-A).

On the other hand, channel quality indicator (CQI) feedback has been used in LTE Rel. 8 to facilitate adaptive modulation and coding, where the CQI depends not only on the channel itself but also on the interference seen by the UE. Current CQI feedback mechanisms may not be capable of supporting multi-user multiple input, multiple output (MU-MIMO) and cooperative multipoint (CoMP) operations, especially when the transmitter processing is UE-transparent thanks to precoded demodulation reference signals (DMRS).

A single codebook is desired which performs well in different fading scenarios, for different antenna spacing, antenna patterns and polarization profiles, and so on. However, it is difficult to design a codebook that is optimal for all environments and configurations. As a result, the current LTE Rel. 8 codebook designs are a compromise of many factors. The LTE Rel. 8 design works reasonably well for SU-MIMO, but for MU-MIMO it has been shown that substantial performance improvement is possible with further codebook optimization.

Document EP 1 944 883 A2 shows a method and system for adaptive codebook design. A transmitter performs a transmit precoding of a signal before it is transmitted over a wireless channel to a receiver. The receiver removes the precoding and further processes the signal. Furthermore, the receiver performs a channel estimation and an estimation quantization and transmits a feedback based upon the quantized channel information back to the transmitter side.

Document "Adaptive Codebook Designs for DL MIMO, 3GPP Draft, mobile competence center, XP050339700" shows a system and method for adaptive codebook design. Also according to the document, a receiver performs channel estimation and sends a feedback signal back to a transmitter.

**SUMMARY OF THE INVENTION**

These and other problems are generally solved or circumvented, and technical advantages are generally achieved, by preferred embodiments of the present invention which provide a system and method for wireless communications with adaptive codebooks.

In accordance with a preferred aspect of the present invention, a method for communications node operations is provided. The method includes estimating a communications channel between the communications node and a controller serving the communications node, quantizing the estimated communications channel based on an adapted codebook, estimating statistics of the communications channel, transmitting a first indicator of the quantized estimated communications channel, adjusting the adapted codebook based on the estimated statistics, and receiving a transmission from the controller. The transmission is precoded based on the first indicator of the quantized estimated communications channel. The method further comprises receiving a component of a function of the statistics of the communications channel from the controller.

In accordance with another example, a method for communications node operations is provided. The method includes estimating a communications channel between the communications node and a controller serving the communications node, quantizing the estimated communications channel based on an adapted codebook, transmitting an indicator of the quantized estimated communications channel, receiving a statistics indicator related to a function of statistics of the communications channel, wherein the statistics indicator is for a statistics codebook, adjusting the adapted codebook based on the statistics indicator, and receiving a transmission from the controller. The transmission is precoded based on the indicator of the quantized estimated communications channel.

In accordance with another example, a method for controller operations is provided. The method includes receiving feedback information for a communications channel between a communications device and the controller, adapting a second codebook based on the feedback information, adjusting a transmitter of the controller based on the adapted second codebook and the feedback information, and transmitting a transmission to the communications device. The feedback information includes a first indicator of a codeword in a first codebook and a second indicator of statistics of the communications channel, and the transmission is precoded using a precoding matrix selected based on the feedback information. In accordance with another example, a method for controller operations is provided. The method includes receiving feedback information for a communications channel between a communications device and the controller, estimating a function of statistics of the communications channel, adapting a first codebook using the function of statistics of the communications channel, adjusting a transmitter of the controller using a first indicator and the adapted codebook, and transmitting a transmission to the communications device. The feedback information comprises the first indicator of a precoding matrix in the first codebook, the transmission is precoded using the precoding matrix, and the precoding matrix is based on the first indicator and the adapted first codebook.

In accordance with example, a method for communications node operation is provided. The method includes estimating a communications channel between the communications node and a controller serving the communications node, quantizing the communications channel based on a first adapted codebook, transmitting a first indicator of the quantized communications channel, estimating statistics of the communications channel, quantizing the statistics of the communications channel based on a second adapted codebook, transmitting a second indicator of the quantized statistics of the communications channel, and receiving a transmission from the controller, wherein the transmission is precoded based on the first indicator and the second indicator. The first adapted codebook and the second adapted codebook are part of a combination codebook.

In accordance with another example, a method for communications node operation is provided. The method includes estimating statistics of a communications channel between the communications node and a controller serving the communications node, quantizing the statistics of the communications channel based on a codebook, and transmitting the quantized statistics of the communications channel over a shared feedback channel.

In accordance with another example, a method for controller operations is provided. The method includes receiving spatial auto-correlation information from a communications node served by the controller, generating an adapted codebook from a baseline codebook and the spatial auto-correlation information; receiving feedback information from the communications node, and transmitting information to the communications node, wherein the information is precoded based on an indicator. The feedback information includes the indicator of a codeword in the adapted codebook.

In accordance with another example, a method for communications device operations is provided. The method includes generating N unit norm vectors from each codeword a rank-N codebook, where N is a positive integer value, transforming each unit norm vector in the N unit norm vectors from each codeword into a codeword in a higher rank codebook, receiving feedback information from a communications node, and transmitting information to the communications node. The feedback information comprising an indicator of a codeword in the higher rank codebook; and the information is precoded based on the indicator.

In accordance with another example, a communications device is provided. The communications device includes a channel estimate unit, an adaptation unit coupled to the channel estimate unit, a quantizer coupled to the adaptation unit and to the channel estimate unit, and a channel statistics unit coupled to the channel estimate unit. The channel estimate unit estimates a channel between the communications device and a remote communications device, and the adaptation unit adapts a baseline codebook based on information provided by the remote communications device or the channel estimate unit, thereby producing an adapted codebook. The quantizer quantizes a channel estimate using the baseline codebook, the adapted codebook, or a combination thereof; and the channel statistics unit generates channel statistics based on the channel estimate.

An advantage of an aspect is that long term channel information is used to adapt an adaptive codebook. Since long term channel information is used, a frequency that the information needs to be fedback is lower, thereby reducing feedback overhead. Furthermore, a variety of different long term channel information feedback techniques are provided, which may further reduce feedback overhead.

A further advantage of an aspect is that adaptive codebook designs for dual polarized antenna arrays are provided. The adaptive codebook designs help to reduce the amount of information that is fedback, thereby reducing feedback overhead. Additionally, the techniques disclose that the feedback information may be fedback at different rates depending on the nature of the feedback information, thus leading to additional reductions in feedback overhead.

Yet another advantage of an aspect is that adapting codebooks may make use of time and/or frequency channel characteristics of the channel. In other words, time domain correlation of the channel characteristics of the channel may be used if time domain channel statistics are used. However, if frequency domain channel statistics are used, then frequency domain correlation of the channel characteristics of the channel is used.

The foregoing has outlined rather broadly the features and technical advantages of the present invention in order that the detailed description of the embodiments that follow may be better understood. Additional features and advantages of the embodiments will be described hereinafter which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

BRIEF DESCRIPTION OF THE DRAWINGS

For a more complete understanding of the present invention, and the advantages thereof, reference is now made to the following descriptions taken in conjunction with the accompanying drawing, in which:

Figure 1 is a diagram of a portion of a prior art wireless communications system;

Figure 2 is a diagram of a wireless communications system utilizing a baseline codebook in communications channel information feedback;

Figure 3 is a diagram of a wireless communications system utilizing a non-transparent adaptive codebook (AC) in communications channel information feedback;

Figure 4 is a diagram of a wireless communications system utilizing a transparent adaptive codebook (AC) in communications channel information feedback;

Figure 5 is a diagram of a wireless communications system utilizing a semi-transparent adaptive codebook (AC) in communications channel information feedback;

Figure 6 is a diagram of a wireless communications system utilizing a non-transparent adaptive codebook (AC) in communications channel information feedback with a function of R being fedback to be used in codebook adaptation;

Figure 7 is a diagram of a wireless communications system utilizing a non-transparent adaptive codebook (AC) in communications channel information feedback with dual codebooks;

Figure 8 is a diagram of a wireless communications system utilizing a semi-transparent adaptive codebook (AC) in communications channel information feedback with dual codebooks;

Figure 9 is a diagram of a wireless communications system utilizing a semi-transparent adaptive codebook (AC) in communications channel information feedback with signaling;

Figure 10 is a diagram of a wireless communications system utilizing a semi-transparent adaptive codebook (AC) in communications channel information feedback with signaling/feedback;

Figure 11 is a plot of eigenmode variation for a communications device with a four transmit antenna/four receive antenna configuration;

Figure 12 is a flow diagram of communications device operations in adapting a baseline codebook, wherein the communications device has dual polarized antennas;

Figure 13 is a flow diagram of communications device operations in adapting a baseline codebook,

wherein the baseline codebook is a higher rank codebook;

Figure 14 is a flow diagram of communications device operations in providing CQI feedback;

Figure 15 is diagram of a model of codebook quantization of channel information feedback at a UE, wherein the UE is receiving transmissions from an eNB;

Figure 16 is a flow diagram of communications device operations in providing channel information feedback;

Figure 17 is a flow diagram of communications device operations in feeding back channel information that may be used to improve overall communications system performance;

Figure 18a is a diagram of information carried on a PUCCH, including channel information and/or channel statistics, wherein the channel information and/or channel statistics are transmitted in a single transmission instance;

Figure 18b is a diagram of information carried on a PUCCH, including channel information and/or channel statistics, wherein a first portion of the channel information and/or channel statistics are transmitted in a first transmission instance and a second portion of the channel information and/or channel statistics are transmitted in a second transmission instance;

Figure 18c is a diagram of information carried on a PUCCH, including channel information and/or channel statistics, wherein the channel information and/or channel statistics are transmitted in a single transmission instance 1830 along with a CRC or a forward error correction code (FEC);

Figure 18d is a diagram of information carried on a PUCCH, including channel information and/or channel statistics, wherein the channel information and/or channel statistics are repeated in a number of consecutive transmission instances; and

Figure 19 is a diagram of an alternate illustration of a communications device.

## DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described with respect to preferred embodiments in a specific context, namely a 3GPP LTE compliant communications system that supports codebook quantization of channel information. The invention may also be applied, however, to other communications systems, such as WiMAX, and so forth, that support codebook quantization of channel information.

Figure 2 illustrates a wireless communications system 200 utilizing a baseline codebook in communications channel information feedback. Wireless communications system 200 includes a transmitter 205 transmitting to a receiver 210 over a channel 215. In order to improve performance, receiver 210 measures and transmits information related to channel 215 to transmitter 205. Since a feedback channel used to transmit the feedback information may have limited resources, reducing feedback information overhead may help to improve overall communications system performance.

One technique commonly used to reduce feedback information overhead is to use a baseline codebook to quantize the measurement of channel 215 and then feeding back only an index into the baseline codebook to transmitter 205 instead of the actual measurement of channel 215. Both receiver 210 and transmitter 205 possess copies of the baseline codebook (shown as baseline codebook 220 for receiver 210 and baseline codebook 225 for transmitter 205). The baseline codebook used for quantizing the measurement of channel 215 may be predefined and fixed.

Figure 3 illustrates a wireless communications system 300 utilizing a non-transparent adaptive codebook (AC) in communications channel information feedback. Wireless communications system 300 includes a transmitter 305 transmitting to a receiver 310 over a channel 315. Receiver 310 provides quantized measurements of channel as feedback to transmitter.

However, instead of using a baseline codebook that remains fixed, wireless communications system 300 utilizes an adapted codebook that may be adjusted over time to meet changing operating conditions. Like baseline codebooks, adapted codebooks are shared by both transmitter 305 and receiver 310 (shown as adapted codebook 320 for receiver 310 and adapted codebook 325 for transmitter 305).

Adjusting the adapted codebook may be performed using mid-/long-term channel statistics $R$. As receiver 310 adjusts its adapted codebook 320 using $R$, receiver 310 may feedback $R$ back to transmitter 305 so that transmitter 305 may also adjust its adapted codebook 325. $R$ may normally be in the form of a matrix and may be fedback in its matrix form or a modified form, such as a reduced rank version, for example.

Since $R$ is a mid-/long-term channel statistic, it may not be necessary to frequently feedback $R$ to transmitter 305. Therefore, $R$ may be fedback to transmitter 305 relatively infrequently compared to receiver 310 feeding back quantized measurements of channel 315.

Transmitter 305 may make use of a precoding matrix as recommended by receiver 310 in an indicator fedback by receiver 310 in transmissions to receiver 310. Alternatively, transmitter 305 may make use of a precoding matrix as recommended by receiver 310 to determine an alternate precoding matrix that it may use in transmissions to receiver 310.

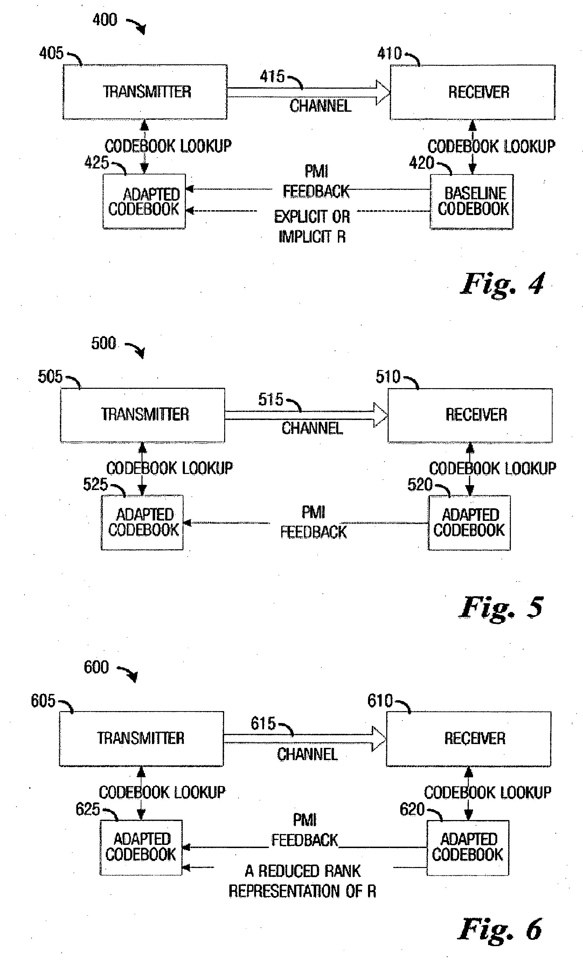

Figure 4 illustrates a wireless communications system 400 utilizing a transparent adaptive codebook (AC) in communications channel information feedback. Wireless communications system 400 includes a transmitter 405 transmitting to a receiver 410 over a channel 415. Receiver 410 provides quantized measurements of channel 415 as feedback to transmitter 405.

Unlike in a wireless communications system using non-transparent AC, receiver 410 makes use of a baseline codebook 420 to quantize measurements of channel 415 and any adjustments to baseline codebook are made at transmitter 405 (shown as adapted codebook 425), wherein the adjustments are unknown to receiver 410.

Adjustments to adapted codebook 425 may be performed using $R$ or similar mid-/long-term channel statistics. $R$ or some form of $R$ may be fedback by receiver 410 either explicitly or may be obtained implicitly by transmitter 405.

Transmitter 405 may make use of a precoding matrix as recommended by receiver 410 in an indicator fedback by receiver 410 in transmissions to receiver 410. Alternatively, transmitter 405 may make use of a precoding matrix as recommended by receiver 410 to determine an alternate precoding matrix that it may use in transmissions to receiver 410.

Figure 5 illustrates a wireless communications system 500 utilizing a semi-transparent adaptive codebook (AC) in communications channel information feedback. Wireless communications system 500 includes a transmitter 505 transmitting to a receiver 510 over a channel 515. Receiver 510 provides quantized measurements of channel as feedback to transmitter.

Both receiver 510 and transmitter 505 utilize the same adapted codebook (shown as adapted codebook 520 for receiver 510 and adapted codebook 525 for transmitter 505). However, receiver 510 does not need to feedback mid-/long-term channel statistics $R$ to transmitter 505. Rather, $R$ may be obtained implicitly at transmitter 505 without explicit feedback from receiver 510. Depending on how $R$ is obtained at transmitter 505, additional downlink signaling may be necessary.

Transmitter 505 may make use of a precoding matrix as recommended by receiver 510 in an indicator fedback by receiver 510 in transmissions to receiver 510. Alternatively, transmitter 505 may make use of a precoding matrix as recommended by receiver 510 to determine an alternate precoding matrix that it may use in transmissions to receiver 510.

Figure 6 illustrates a wireless communications system 600 utilizing a non-transparent adaptive codebook (AC) in communications channel information feedback with a function of $R$ being fedback to be used in codebook adaptation. Wireless communications system 600 includes a transmitter 605 transmitting to a receiver 610 over a channel 615. Receiver 610 provides quantized measurements of channel as feedback to transmitter.

However, instead of using a baseline codebook that remains fixed, wireless communications system 600 utilizes an adapted codebook that may be adjusted over time to meet changing operating conditions. Like baseline codebooks, adapted codebooks are shared by both transmitter 605 and receiver 610 (shown as adapted codebook 620 for receiver 610 and adapted codebook 625 for transmitter 605).

Adjusting the adapted codebook may be performed using mid-/long-term channel statistics $R$. As receiver 610 adjusts its adapted codebook 620 using $R$, receiver 610 may feedback a function of $R$ back to transmitter 605 so that transmitter 605 may also adjust its adapted codebook 625. An example of a function of $R$ fedback to transmitter 605 may be a reduced rank version of $R$. Once transmitter 605 receives the function of $R$ fedback by receiver 610, transmitter 605 may reconstruct $R$ in order to adjust its adapted codebook 625.

Since $R$ is a mid-/long-term channel statistic, it may not be necessary to frequently feedback the function of $R$ to transmitter 605. Therefore, the function of $R$ may be fedback to transmitter 605 relatively infrequently compared to receiver 610 feeding back quantized measurements of channel 615.

Transmitter 605 may make use of a precoding matrix as recommended by receiver 610 in an indicator fedback by receiver 610 in transmissions to receiver 610. Alternatively, transmitter 605 may make use of a precoding matrix as recommended by receiver 610 to determine an alternate precoding matrix that it may use in transmissions to receiver 610.

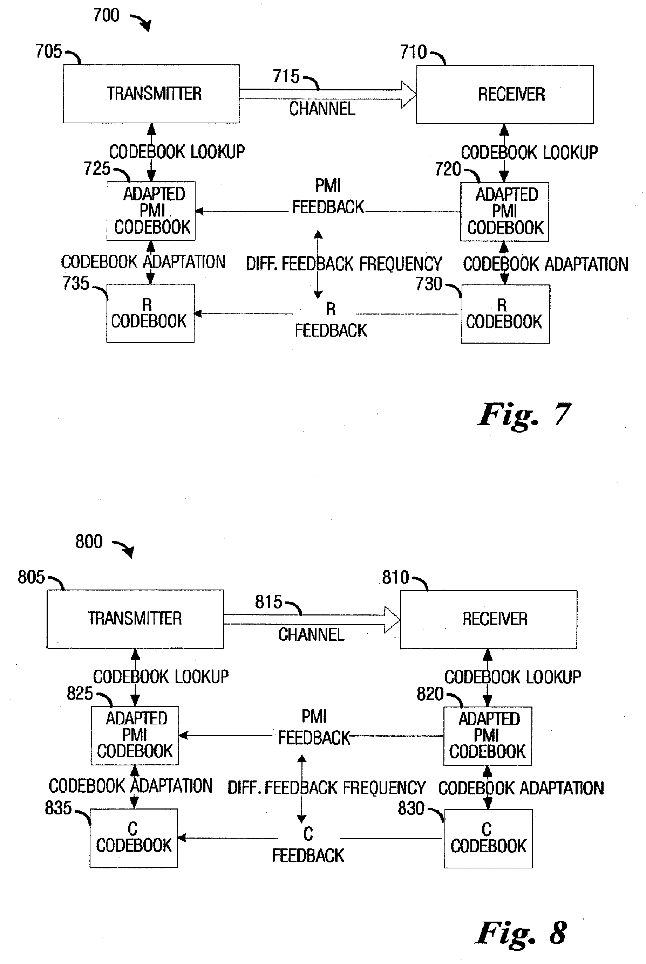

Figure 7 illustrates a wireless communications system 700 utilizing a non-transparent adaptive codebook (AC) in communications channel information feedback with dual codebooks. Wireless communications system 700 includes a transmitter 705 transmitting to a receiver 710 over a channel 715. Receiver 710 provides quantized measurements of channel as feedback to transmitter.

However, instead of using a baseline codebook that remains fixed, wireless communications system 700 utilizes an adapted codebook that may be adjusted over time to meet changing operating conditions. Like baseline codebooks, adapted codebooks are shared by both transmitter 705 and receiver 710 (shown as adapted PMI codebook 720 for receiver 710 and adapted PMI codebook 725 for transmitter 705).

Adjusting the adapted codebook may be performed using mid-/long-term channel statistics $R$. As receiver 710 adjusts its adapted PMI codebook 720 using $R$, receiver 710 may either feedback $R$ or a function of $R$ back to transmitter 705 so that transmitter 705 may also adjust its adapted PMI codebook 725. An example of a function of $R$ fedback to transmitter 705 may be a reduced rank version of $R$. Once transmitter 705 receives $R$ or the function of $R$ fedback by receiver 710, transmitter 705 may reconstruct $R$ in order to adjust its adapted PMI codebook 725. The feedback of $R$ or the function of $R$ may occur at a different frequency (usually lower) than the feedback of the quantized measurements of channel 715.

In order to further reduce feedback channel overhead, receiver 710 may also quantize $R$ or the function of $R$. The quantization of $R$ or the function of $R$ may be performed using an $R$ codebook (shown as $R$ codebook 730 for receiver 710 and $R$ codebook 735 for transmitter 705). The quantization of $R$ or the function of $R$ may occur at several levels. A first quantization level may be a codebook level quantization of $R$, wherein an index may be used to represent a quantized version of $R$. With codebook level quantization, only the index needs to be fedback to transmitter 705. A second quantization level may be a scalar level quantization of $R$, wherein individual terms of $R$ may be quantized to a desired precision. With scalar level quantization, an $R$ codebook may only have to store scalar values at the desired precision. For example, if a value of a term of $R$ is actually 0.33333333, a scalar value with two decimal place precision may be 0.33 may be stored in the $R$ codebook.

Transmitter 705 may make use of a precoding matrix as recommended by receiver 710 in an indicator fedback by receiver 710 in transmissions to receiver 710. Alternatively, transmitter 705 may make use of a precoding matrix as recommended by receiver 710 to determine an alternate precoding matrix that it may use in transmissions to receiver 710.

Wireless communications systems 600 and 700 may make use of SU-MIMO, MU-MIMO, or multi-cell MIMO (MC-MIMO). With a wireless communications systems supporting MU-MIMO and/or MC-MIMO (coordinated beam forming, for example), both transmitters and receivers in the wireless communications system may use a common adapted codebook with the common adapted codebook being adjusted using $R$ or a function of $R$. The common adapted codebook may also be a double codebook.

In MU-MIMO, there may be a single transmitter and multiple receivers. The transmitter maintains an adapted codebook for each receiver that it serves, with each adapted codebook being adjusted using $R$ or a function of $R$. For example, a reduced rank representation of channel statistics may be used to adapt a codebook (performed at both the transmitter and the receiver for each receiver served by the transmitter); at each receiver, the adapted codebook may be used to quantize a channel estimate, which may be sent to the transmitter; while at the transmitter, the adapted codebook for each receiver is used to reconstruct a channel estimate for each receiver, which may then be used in transmissions for each receiver, wherein the transmissions are made using MU-MIMO techniques.

In MC-MIMO, there may be multiple transmitters and multiple receivers with each transmitter maintaining an adapted codebook for each receiver that it serves plus for receivers that it may possibly interfere with, with each adapted codebook being adjusted using $R$ or a function of $R$. For example, a reduced rank representation of channel statistics may be used to adapt a codebook (performed at both the transmitter and the receiver for each receiver served by the transmitter and each receiver that may be interfered by the transmitter); at each receiver, the adapted codebook may be used to quantize a channel estimate, which may be sent to each transmitter interacting with the receiver; while at the transmitter, the adapted codebook for each receiver is used to reconstruct a channel estimate for each receiver, which may then be used in transmissions for each receiver, wherein the transmissions are made using MC-MIMO techniques.

Figure 8 illustrates a wireless communications system 800 utilizing a semi-transparent adaptive codebook (AC) in communications channel information feedback with dual codebooks. Wireless communications system 800 includes a transmitter 805 transmitting to a receiver 810 over a channel 815. Receiver 810 provides quantized measurements of channel 815 as feedback to transmitter 805.

However, instead of using a baseline codebook that remains fixed, wireless communications system 800 utilizes an adapted codebook that may be adjusted over time to meet changing operating conditions. Like baseline codebooks, adapted codebooks are shared by both transmitter 805 and receiver 810 (shown as adapted PMI codebook 820 for receiver 810 and adapted PMI codebook 825 for transmitter 805).

Adjusting the adapted codebook may be performed using mid-/long-term channel statistics $R$. As receiver 810 adjusts its adapted codebook 820 using $R$, receiver 810 may feedback a function of $R$ referred to as C back to transmitter 805 so that transmitter 805 may also adjust its adapted PMI codebook 825. An example of C fedback to transmitter 805 may be a complete knowledge of C or partial knowledge of C, such as part of the eigenvectors and/or part of the eigenvalues of C. Once transmitter 805 receives C fedback by receiver 810, transmitter 805 may reconstruct $R$ in order to adjust its adapted PMI codebook 825.

In order to further reduce feeback channel overhead, receiver 810 may also quantize C. The quantization of C may be performed using a C codebook (shown as C codebook 830 for receiver 810 and C codebook 835 for transmitter 805). As with the feedback of $R$ or a function of $R$, the feedback of C may occur at a different frequency (usually lower) than the feedback of the quantized measurements of channel 815.

Transmitter 805 may make use of a precoding matrix as recommended by receiver 810 in an indicator fedback by receiver 810 in transmissions to receiver 810. Alternatively, transmitter 805 may make use of a precoding matrix as recommended by receiver 810 to determine an alternate precoding matrix that it may use in transmissions to receiver 810.

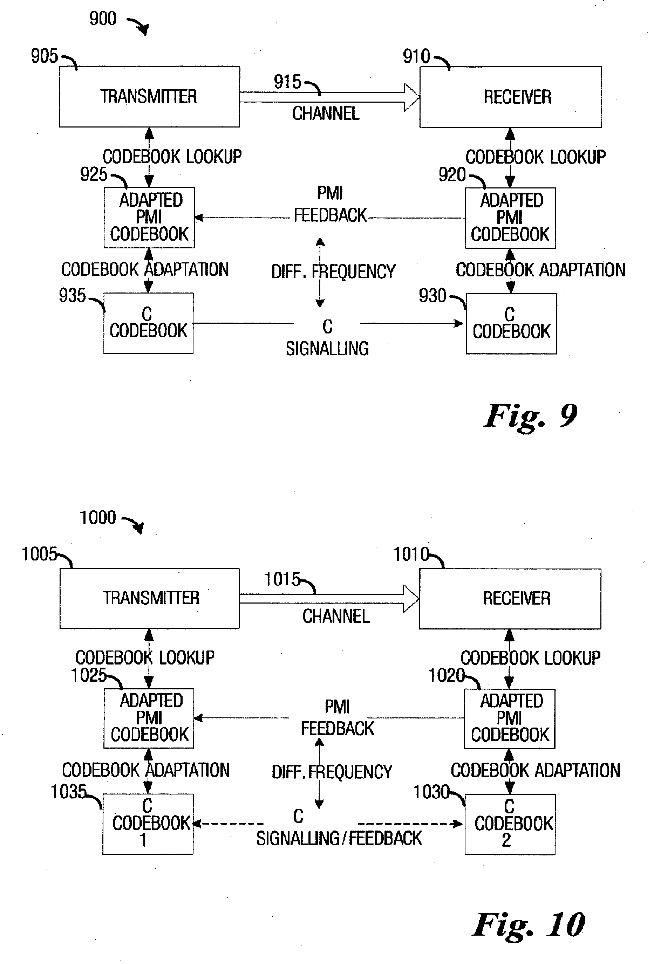

Figure 9 illustrates a wireless communications system 900 utilizing a semi-transparent adaptive codebook (AC) in communications channel information feedback with signaling. Wireless communications system 900 includes a transmitter 905 transmitting to a receiver 910 over a channel 915. Receiver 910 provides quantized measurements of channel as feedback to transmitter.

However, instead of using a baseline codebook that remains fixed, wireless communications system 900 utilizes an adapted codebook that may be adjusted over time to meet changing operating conditions. Like baseline codebooks, adapted codebooks are shared by both transmitter 905 and receiver 910 (shown as adapted PMI codebook 920 for receiver 910 and adapted PMI codebook 925 for transmitter 905).

Adjusting the adapted codebook may be performed using mid-/long-term channel statistics $R$. As transmitter 905 adjusts its adapted PMI codebook 925 using $R$, transmitter 905 may signal a function of $R$ referred to as C to receiver 910 so that receiver 910 may also adjust its adapted PMI codebook 920. In order to use C, transmitter 905 may need to perform estimations of channel 915 in order to estimate C. An example of C signaling to receiver 910 may be a complete knowledge of C or partial knowledge of C, such as part of the eigenvectors and/or part of the eigenvalues of C. Once receiver 910 receives C signaled by transmitter 905, receiver 910 may reconstruct $R$ in order to adjust its adapted PMI codebook 920.

In order to further reduce downlink channel overhead, transmitter 905 may also quantize C. The quantization of C may be performed using a C codebook (shown as C codebook 930 for receiver 910 and C codebook 935 for transmitter 905). As with the feedback of $R$ or a function of $R$, the signaling of C may occur at a different frequency (usually lower) than the feedback of the quantized measurements of channel 915.

Transmitter 905 may make use of a precoding matrix as recommended by receiver 910 in an indicator fedback by receiver 910 in transmissions to receiver 910. Alternatively, transmitter 905 may make use of a precoding matrix as recommended by receiver 910 to determine an alternate precoding matrix that it may use in transmissions to receiver 910.

Figure 10 illustrates a wireless communications system 1000 utilizing a semi-transparent adaptive codebook (AC) in communications channel information feedback with signaling/feedback. Wireless communications system 1000 includes a transmitter 1005 transmitting to a receiver 1010 over a channel 1015. Receiver 1010 provides quantized measurements of channel 1015 as feedback to transmitter 1005.

However, instead of using a baseline codebook that remains fixed, wireless communications system 1000 utilizes an adapted codebook that may be adjusted over time to meet changing operating conditions. Like baseline codebooks, adapted codebooks are shared by both transmitter 1005 and receiver 1010 (shown as adapted PMI codebook 1020 for receiver 1010 and adapted PMI codebook 1025 for transmitter 1005).

Adjusting the adapted codebooks may be performed using mid-/long-term channel statistics $R$. Transmitter 1005 and receiver 1010 may potentially use different versions of a function of $R$ referred to as C, with transmitter 1005 estimating channel 1015 to estimate its own C and receiver 1010 estimating channel 1015 to estimate its own C. The estimated C may be stored in a C codebook (shown as C codebook 1 1035 for transmitter 1005 and C codebook 2 1030 for receiver 1010). Once estimated, C may be used to reconstruct $R$ in order to adjust a corresponding adapted PMI codebook.

According to a preferred embodiment, transmitter 1005 and receiver 1010 may share some or all of their estimated values of C. For example, transmitter 1005 and receiver 1010 may share the eigenvectors of C by feedback and/or signaling, but may have their own version of eigenvalues of C. Alternatively, transmitter 1005 and receiver 1010 may share the eigenvalues of C by feedback and/or signaling, but may have their own version of eigenvectors of C. The sharing of the estimated values of C may occur at a frequency different from the feedback of quantized measurements of channel 1015.

Transmitter 1005 may make use of a precoding matrix as recommended by receiver 1010 in an indicator feedback by receiver 1010 in transmissions to receiver 1010. Alternatively, transmitter 1005 may make use of a precoding matrix as recommended by receiver 1010 to determine an alternate precoding matrix that it may use in transmissions to receiver 1010.

In the downlink of an LTE Release-8 compliant communications system, a variety of information may be fedback, including a rank indicator (RI), a precoded matrix indicator (PMI), and a channel quality indicator (CQI). RI feedback may be used to indicate a current rank condition of a channel. Generally, the higher the RI, the better the channel condition to support high throughput transmissions. PMI feedback may be used to facilitate closed loop transmit beamforming/precoding with a finite number of feedback bits. Roughly, PMI may be a finite-bit representation of a channel's singular vectors (or spatial directions). Let $H_k$ be the downlink channel at time instant k and $W = [w_1, w_2, ..., w_N]$ be a pre-defined codebook of size N, then the PMI feedback at time instant k can be written in general as

$$PMI_k = \arg\min_n d(w_n, H_k),$$

where $d(w_n, H_k)$ is a proper distance metric (e.g chordal distance, angle distance or others) between the nth codeword $w_n$ and the current channel $H_k$. In the equation for PMI, $PMI_k$ refers to the actual precoding matrix, not the index to the precoding matrix.

On the other hand, channel quality indicator (CQI) feedback may be used in LTE Release-8 to enable adapting the modulation and coding selection (MCS) at the transmitter side. Generally, CQI is equivalent to the channel's eigenvalues divided by the interference level seen by the UE.

In some scenarios, it is desired to have the statistical long term channel info available at the transmitter. Specifically, there is an interest in obtaining (or an approximation of)

$$R = \sum_{k=1}^{K} H_k' H_k$$

at the transmitter side. This can be done in a number of ways:

Method 1: Explicit Feedback is straightforward to estimate $R$ at the receiver and feed it back to the transmitter.
Method 2: Blind estimation based on LTE Release-8 PMI and CQI/RI.
Method 3: Blind estimation based on LTE Release-8 PMI and eigenvalue reciprocity. Explicit feedback (Method 1) may be straightforward, while blind estimation (Methods 2 and 3) may be two different methods that are described below. A key observation regarding Method 2 is that, what accounts is not the absolute value of $R$, but a relative structure of $R$. The relative structure of $R$ may be defined as a relative ratio of eigenvalues of $R$. For example, if the actual downlink channel correlation is $R$, then it may be sufficient to obtain a good estimate of $R/t$ for an arbitrary nonzero real number t.

Method 2: Blind estimation based on LTE Release-8 PMI and CQI/RI:

Let $R_{dl}$ denote the downlink long-term channel correlation matrix expressible as:

$$\mathbf{R}_{dl} = \sum_i \mathbf{H}_{dl,i}^{\mathcal{H}} \mathbf{H}_{dl,i} = \sum_i \sum_{k=1}^{N} \sigma_{dl,i,k}^2 \mathbf{u}_{dl,i,k} \mathbf{u}_{dl,i,k}^{\mathcal{H}}.$$

In essence, $R_{dl}$ may be decomposed as shown above, which is the time averaged $H_{dl,i}{}^H H_{dl,i}$, where $H_{dl,i}$ is the downlink instant channel at time instant $i$. Let $\sum_{k=1}^{N} \sigma_{dl,i,k}^2 \mathbf{u}_{dl,i,k} \mathbf{u}_{dl,i,k}^{\mathcal{H}}$ be the eigenvalue decomposition of the Hermitian matrix $H_{dl,i}{}^H H_{dl,i}$, where $\sigma_{dl,i,k}$ is the k-th eigenvalue of $H_{dl,i}$, and $u_{dl,i,k}$ is the k-th eigenvector *of* $H_{dl,i}$. For simplicity, the eigenvalues may be ordered in a decreasing order. The maximum number of eigenvalues is N, which is assumed constant over the time course.

It may then be possible to reconstruct $R_{dl}$ by using existing feedback (RI, CQI, and PMI). The reconstruction of $R_{dl}$ may be expressible as:

$$\hat{\mathbf{R}}_{dl} = \sum_i \sum_{k=1}^{r_i} CQI_{i,k} \cdot PMI_{i,k} \cdot PMI_{i,k}^{\mathcal{H}}, \qquad \text{(Estimation method 2)}$$

where $CQI_{i,k}$ is the k-th CQI value (not the index) in time $i$, $r_i$ is the maximum number of CQIs in time $i$, and $PMI_{i,k}$ is the component of the precoding matrix that corresponds to $CQI_{i,k}$. Such a component could be one column or two columns of the precoding matrix, depending on the codeword to rank mapping.

Essentially, over a relatively long time period, the long term channel correlation may be approximated as follows:

1. Obtain the product of $CQI_{i,k} \cdot PMI_{i,k} \cdot PMI_{i,k}^{\mathcal{H}}$ for the k-th CQI of the i-th time instant;
2. Sum up all the products for all the CQIs and across all the time instants within the time window.

Notice that the $CQI_{i,k}$ may be approximated as $\mathrm{CQI}_{i,k} \approx \dfrac{\sigma^2_{dl,i,k}}{\mathrm{Int}_{i,k}}$ Because of the existence of $\mathrm{Int}_{i,k}$,

Method 2 as presented above may lose some accuracy in approximating $R_{dl}$.

Therefore, it may be possible to modify Method 2 as presented above to:

$$\hat{\mathbf{R}}_{dl} = \sum_i \sum_{k=1}^{r_i} \frac{\mathrm{CQI}_{i,k}}{\mathrm{CQI}_{i,r_i}} \cdot \mathrm{PMI}_{i,k} \cdot \mathrm{PMI}_{i,k}^{\mathcal{H}}$$ .(Estimation Method 2a)

Alternatively, $CQI_{i,l}$ may be used instead of $CQI_{i,ri}$ in the above formula for estimation Method 2a. Overall Method 2a is similar to Method 2, except the weighting coefficients change from $CQI_{i,k}$ to $CQI_{i,k}/CQI_{i,ri}$.

Basically, the CQI ratio may be expressed as:

$$\frac{\mathrm{CQI}_{i,k}}{\mathrm{CQI}_{i,r_i}} \approx \frac{\sigma^2_{dl,i,k}}{\sigma^2_{dl,i,r_i}} \cdot \frac{\mathrm{Int}_{i,r_i}}{\mathrm{Int}_{i,k}} \approx \frac{\sigma^2_{dl,i,k}}{\sigma^2_{dl,i,r_i}}$$ .

if $r_i = 1$, then the CQI ratio becomes 1 and Method 2a becomes $\hat{\mathbf{R}}_{dl} = \sum_i \mathrm{PMI}_{i,1} \cdot \mathrm{PMI}_{i,1}^{\mathcal{H}}$ .

Blind estimation based on LTE Release-8 PMI and eigenvalue reciprocity:

Let $PMI_{i,k}$ refer to the k-th column of the precoding matrix for time $i$ and $r_i$ refers to the rank indicator for time $i$. In general, $PMI_{i,k}$ may be used to approximate $u_{dl,i,k}$ and may be used to approximate $R$. However, a question exists regarding the approximation of the eigenvalues.

Method 2 describes ways to approximate the eigenvalues by using the CQIs and/or CQI ratios. Method 3 focuses on approximating the eigenvalues by using the uplink channel and may be expressed as:

$$\hat{\mathbf{R}}_{dl} = \sum_i \sum_{k=1}^{r_i} \hat{\sigma}^2_{dl,i,k} \cdot \mathrm{PMI}_{i,k} \cdot \mathrm{PMI}_{i,k}^{\mathcal{H}}$$

$$\Updownarrow$$

$$\mathbf{R}_{dl} = \sum_i \sum_{k=1}^{N} \sigma^2_{dl,i,k} \mathbf{u}_{dl,i,k} \mathbf{u}_{dl,i,k}^{\mathcal{H}}$$ .

As shown below, the eigenvalue is typically distributed as follows: for the largest eigenvalue (both the uplink and downlink version), it is most stable with little variation over the time and/or frequency domain; for the smallest eigenvalue (both the uplink and downlink version), it is most unstable with large variation over the time and/or frequency domain. Thus, the uplink eigenvalues may be used to estimate/predict the downlink eigenvalues, for those large eigenvalues. While the weak eigenvalues may simply be discarded as they do not contribute much in the first place and tend to bring much estimation/prediction error.

Method 3 blind estimation may be expressed as:

$$\hat{R}_{dl} = \sum_i \sum_{k=1}^{r_i} f(\sigma^2_{ul,i,k}) \cdot PMI_{i,k} \cdot PMI_{i,k}^{H} ,$$ (Estimation Method 3)

where $\sigma_{ul,i,k}^2$ is the k-th eigenvalue of the uplink channel in time instant $i$, and f() is the function that is necessary to transform the uplink eigenvalues to the downlink eigenvalues. Similar to estimation Method 2a versus Method 2, a modified version of method 3a exists and is expressible as:

$$\hat{R}_{dl} = \sum_i \sum_{k=1}^{r_i} \frac{f(\sigma^2_{ul,i,k})}{f(\sigma^2_{ul,i,r_i})} \cdot PMI_{i,k} \cdot PMI_{i,k}^H . \quad \text{(Estimation Method 3a)}$$

In the above discussed Methods 2, 2a, 3, and 3a, although the summation up to rank $r_i$ are used, where $r_i$ the current RI indicator, the summation up to some other rank r may also be used, which is not necessarily the same as the current RI indicator. Alternatively, $f(\sigma^2_{ul,\,i,r1})$ may be used instead of $(\sigma^2_{ul,\,i,\,ri})$ in Method 3a.

For a Nr * Nt MIMO channel H, the channel singular value decomposition is H = USV' where U and V are unitary matrices and S = diag (S1, S2, ..., Sq) with q = min (Nt, Nr) is a diagonal matrix containing the singular values in a decreasing order. It can be shown that square of singular values (also known as eigenmode of the channel) is simply the eigenvalues of H*H'. The nth eigenvalue Pn = Sn^2 is proportional to the channel SNR (signal to noise ratio). Notice that Pn is independent of the interference level.

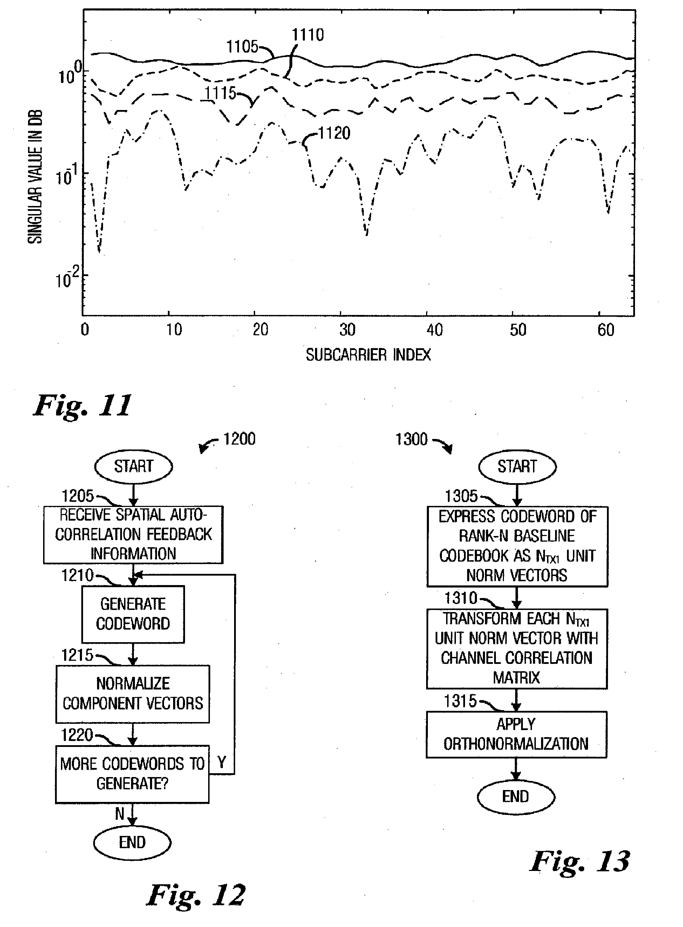

It is known that given perfect CSI (channel state info) at the transmitter, the n-th (in a decreasing order) eigenvalue of the channel has a diversity order of (Nt - n +1) * (Nr -n +1). A typical variation of the eigenmodes is illustrated in Figure 11 for a four transmit antenna and four receive antenna setup with 10 tap equal gain channel taps in the time domain and 64 sub-carriers in the frequency domain. Notice that singular values are plotted in Figure 11. However, eigenvalues show similar behavior.

The four curves illustrated in Figure 11 represent the four singular values of the channel in dB, from the first eigenmode (curve 1105 on the top) to the last eigenmode (curve 1120 on the bottom) with second eigenmode (curve 1110) and third eigenmode (curve 1115) also shown. Roughly speaking, the strongest eigenmode is least frequency selective, being relatively flat over the frequency domain. On the other hand, the weakest eigenmode is most frequency selective, having a much larger dynamic range than other eigenmodes. Similarly in the time domain for a relatively slow varying channels, it is expected that the strongest eigenmode is least time varying and the weakest eigenmode is most time varying.

In particular, a strong eigenmode has a relatively small variance and hence need small number of bits to represent in general, while a weak eigenmode has a relatively large variance and hence need large number of bits to represent in general. On the other hand, a strong eigenmode has a large value and is important while a weak eigenmode has a small value and is not so important relatively speaking.

Blind estimation techniques using PMI and CQI/RI (Methods 2 and 2a) and using PMI and eigenvalue reciprocity (Methods 3 and 3a) may be used to estimate C in wireless communications systems 800, 900, and 1000.

In general, a PMI codebook needs to be designed and maintained at both transmitter and receiver to facilitate the operation of limited feedback transmit beamforming/precoding (i.e., codebook quantization), where the codebook may be a collection of candidate PMIs. Because of its simplicity, an all-weather codebook is previously desired which performs well in different fading scenarios, for different antenna spacing, for different antenna patterns and polarization profiles. As a direct result, the current LTE Rel. 8 codebook designs are a compromise of many factors.

However, higher feedback accuracy is needed to accommodate higher data throughput requirements in LTE-A, particularly where MU-MIMO is used. As a brute force way, a larger codebook may be used, which unfortunately comes with several drawbacks. First, a larger feedback overhead may be experienced since additional index bits are required to index a larger number of codewords and second, designing a larger, all-weather codebook may be difficult.

As an alternative to a fixed, all-weather codebook, a variable codebook may be used. In variable codebooks, a fixed baseline codebook (which may be a conventional design) may be transformed based on operating conditions. The transformed fixed baseline codebook may be referred to as an adapted codebook. The transformation used on the fixed baseline codebook may be determined by spatial channel correlation. Let $R$ be the spatial channel correlation matrix that is known at both transmitter and receiver. If $R$ contains both long term channel information and short term channel information, the adapted codebook may be equivalent to a larger, all-weather codebook in terms of overall performance, while enjoying a lower feedback overhead.

In general, rank-1 adaptive codebook design may start with a fixed baseline codebook ($F^{base}$) of the same size as the adapted codebook ($W^{adaptive}$). Let $R$ be a channel correlation matrix, the adapted codebook may be transformed as

$$W^{adaptive} = normalize\ (R * F^{base}),$$

where *normalize*() normalizes each column to be of norm one.

Dual polarized antennas have received much attention for use in LTE-A. Communications equipment with dual polarized antennas may have a plurality of antennas with some antennas having a first polarization and some antennas having a second polarization. Adaptive codebooks may be extended to communications systems with communications devices with dual polarized antennas.

For discussion purposes, let a communications device have a total of eight antennas with antennas 1 through 4 have a horizontal polarization and antennas 5 through 8 have a vertical polarization. Furthermore, let fk be a k-th baseline codeword of size 8x1. Although each baseline codeword is a vector, it may be largely viewed as a rank-2 transmission for dual polarized antennas. Of course, the view of the baseline codeword as a rank-w transmission may be dependent on an actual achievable separation between the vertical and horizontal domains. The k-th baseline codeword may be expressed as two parts: fkh for the horizontal (h) domain and fkv for the vertical (v) domain. The codeword may be expressed as

$$\mathbf{f}_{k,8 \times 1} := \begin{bmatrix} \mathbf{f}_{kh,4 \times 1} \\ \mathbf{f}_{kv,4 \times 1} \end{bmatrix}.$$

Herein, the dimension of each matrix/submatrix/vector is shown in the subscript of its notation. Furthermore, let the transmitter side 8x8 spatial channel correlation matrix $R$ be partitioned into four parts: Rhh, Rvv, Rhv and Rvh, with the first two being the spatial auto-correlation within the h or v domain (i.e., h or v components), while the last two being the spatial cross-correlation between the h and v domains. The spatial correlation matrix $R$ may be expressed as

$$\mathbf{R}_{8 \times 8} = \begin{bmatrix} \mathbf{R}_{hh,4 \times 4} & \mathbf{R}_{hv,4 \times 4} \\ \mathbf{R}_{vh,4 \times 4} & \mathbf{R}_{vv,4 \times 4} \end{bmatrix}.$$

Then, a k-th codeword of the adapted codebook may be expressed as

$$\mathbf{w}_{k,8 \times 1} := \begin{bmatrix} \mathbf{R}_{hh}\mathbf{f}_{kh} \\ \mathbf{R}_{vv}\mathbf{f}_{kv} \end{bmatrix},$$

where the transformation is carried out separately within each domain. Vector normalization for each component vector may be needed after the transformation.

Figure 12 illustrates a flow diagram of communications device operations 1200 in adapting a baseline codebook, wherein the communications device has dual polarized antennas. Communications device operations 1200 may be indicative of operations occurring in a communications device, operating as a transmitter, as the communications device receives channel information to a receive to help improve overall communications system performance. Communications device operations 1200 may occur while the communications device is in a normal operating mode.

Communications device operations 1200 may begin with the communications device receiving spatial auto-correlation feedback information from the receiver (block 1205). As discussed previously, the spatial auto-correlation feedback information, e.g., Rhh and Rw, may be used by the communications device to adapt a codebook for use with dual polarized antennas. As an example, if communications device has a total of eight antennas with with antennas 1 through 4 have a horizontal polarization and antennas 5 through 8 have a vertical polarization. Furthermore, let fk be a k-th baseline codeword of size 8x1. Then the k-th baseline codeword may be expressed as two parts: fkh for the horizontal (h) domain and fkv for the vertical (v) domain. The codeword may be expressed as

$$\mathbf{f}_{k,8 \times 1} := \begin{bmatrix} \mathbf{f}_{kh,4 \times 1} \\ \mathbf{f}_{kv,4 \times 1} \end{bmatrix}.$$

The communications device may then adapt the codebook using the spatial auto-correlation feedback information by adapting individual codewords in the adapted codebook (block 1210). As an example, a k-th codeword of the adapted codebook may be expressed as

$$\mathbf{w}_{k,8 \times 1} := \begin{bmatrix} \mathbf{R}_{hh}\mathbf{f}_{kh} \\ \mathbf{R}_{vv}\mathbf{f}_{kv} \end{bmatrix},$$

where the transformation is carried out separately within each domain. The communications device may perform vector normalization of each component vector of the adapted codeword if desired (block 1215). The adapted codeword (with or without vector normalization) may be stored in a memory for later use. The communications device may perform a check to determine if there are additional codewords to be adapted (block 1220). If there are additional codewords to be adapted, then the communications device may return to block 1210 to adapt an additional codeword. If there are no additional codewords to be adapted, then communications device operations 1200 may then terminate.

It may be possible to extend adaptive codebooks to higher ranks (e.g., rank-2, rank-3, rank-4, and so forth). For discussion purposes, an example of an adaptation of a rank-2 baseline codebook is shown. Let [fkl fk2] be a k-th rank-2 codeword in a baseline codebook, where fk1 and fk2 are each Ntx1 unit norm vector. A possible rank-2 adaptive codebook may be formed such that the new codeword is transformed as

$$[\text{wk1}= R * \text{fk1}, \text{wk2}= R * \text{fk2}].$$

If it is desired to have a unitary matrix as the codeword, then Gram-schmit orthonormalization need be applied adaptation.

Figure 13 illustrates a flow diagram of communications device operations 1300 in adapting a baseline codebook, wherein the baseline codebook is a higher rank codebook. Communications device operations 1300 may be indicative of operations occurring in a communications device, such as a transmitter or a receiver, which is adapting a baseline codebook to meet operating conditions. Communications device operations 1300 may occur while the communications device is in a normal operating mode.

Communications device operations 1300 may begin with the communications device expressing a codeword from a rank-N baseline codebook as N Ntx1 unit norm vectors (block 1305). As an example, a k-th codeword from a rank-2 baseline codebook may be expressed as
[fk1 fk2],
where fk1 and fk2 are each Ntx1 unit norm vectors.

Each of the Ntx1 unit norm vectors may then be used to generate an adapted codeword for the adapted codebook, with an exemplary transformation using a channel correlation matrix $R$, which may be received from the receiver or computed using measurements made by the communications device (block 1310). Returning to the example illustrated above, the two Ntx1 unit norm vectors may be used to generate the adapted codeword for the adapted codebook by evaluating expression

$$[\text{wk1}= R * \text{fk1}, \text{wk2}= R * \text{fk2}].$$

If there is a desire to have a unitary matrix for the adapted codeword, then orthonormalization, such as with Gram-schmit orthonormalization may be applied (block 1315). Communications device operations 1300 may then terminate when all codewords have been adapted.

In LTE Rel. 8, CQI may be feedback to indicate quality of a channel between a UE and an eNB. CQI may be affected by the channel's strength as well as an interference level at the UE. It may be important to realize that channel strength and interference level may have different behaviours in the time domain and the frequency domain. For example, the channel strength may be relatively slow time variant but interference level may be relatively fast time variant. Therefore, the CQI may be as a result, fast time variant.

For a Nr * Nt MIMO channel H, a channel singular value decomposition is expressible as

$$H = USV',$$

where U and V are unitary matrices and S = diag(S 1, S2, ... Sq) with q = min (Nt, Nr) is a diagonal matrix containing the singular values in a decreasing order. It may be shown that the square of singular values (also known as eigenmode of the channel) is simply the eigenvalues of H*H'. The n-th eigenvalue Pn = Sn^2 is proportional to the channel signal to noise ratio (SNR). Notice that Pn is independent of the interference level.

It may also be known that given perfect channel state information (CSI) at the transmitter, the n-th (in a decreasing order) eigenvalue of the channel has a diversity order of

$$(Nt - n +1) * (Nr -n +1).$$

A typical variation of the eigenmodes is illustrated in Figure 11 for a 4 transmit antenna 4 receive antenna communications system with 10 tap equal gain channel taps in the time domain and 64 sub-carriers in the frequency domain. Notice that singular values are plotted in Figure 11. However, eigenvalues show similar behavior.

The four curves (curves 1105 through 1120) represent the four singular values of the channel in dB, from the first eigenmode on the top (curve 1105) to the last eigenmode on the bottom (curve 1120). Generally, the strongest eigenmode is least frequency selective, being relatively flat over the frequency domain. On the other hand, the weakest eigenmode is most frequency selective, having a much larger dynamic range than other eigenmodes.

Similarly in the time domain for a relatively slow varying channels, it is expected that the strongest eigenmode is least time varying and the weakest eigenmode is most time varying.

|  | Strong eigenmode | Weak eigenmode |
|---|---|---|
| Variance (dynamic range) | Small | Large |
| Number of bits needed | Small | Large |
| Value | Large (important) | Small (not important relatively) |

A table shown above summarizes a comparison of a strong eigenmode and a weak eigenmode of the same channel. In particular, a strong eigenmode has a relatively small variance and hence need small number of bits to represent in general, while a weak eigenmode has a relatively large variance and hence need large number of bits to represent in general. On the other hand, a strong eigenmode has a large value and is important while a weak eigenmode has a small value and is relatively not as important.

The following principles are suggested in feeding back the eigenvalues in complement to CQI feedback.

Certain number of weak eigenvalues may be removed safely without impacting the performance much; If those weak eigenvalues need be fedback, they would actually cost more overhead.

For the remaining eigenvalues, different feedback period for different eigenvalues may be used. For example, the first eigenvalue may have a larger feedback period (slower feedback rate) than the second eigenvalue. Also, a differential based feedback scheme may be used. For example, the difference between the first eigenvalue in the current time window and the first eigenvalue in the previous time window is fedback.

Note that the above technique may be applied in either the frequency domain and/or the time domain, depending on the source of the correlation. Furthermore, the above technique applies to the eigenvalues of the channel, singular values of the channel, or other similar performance metrics of the channel.

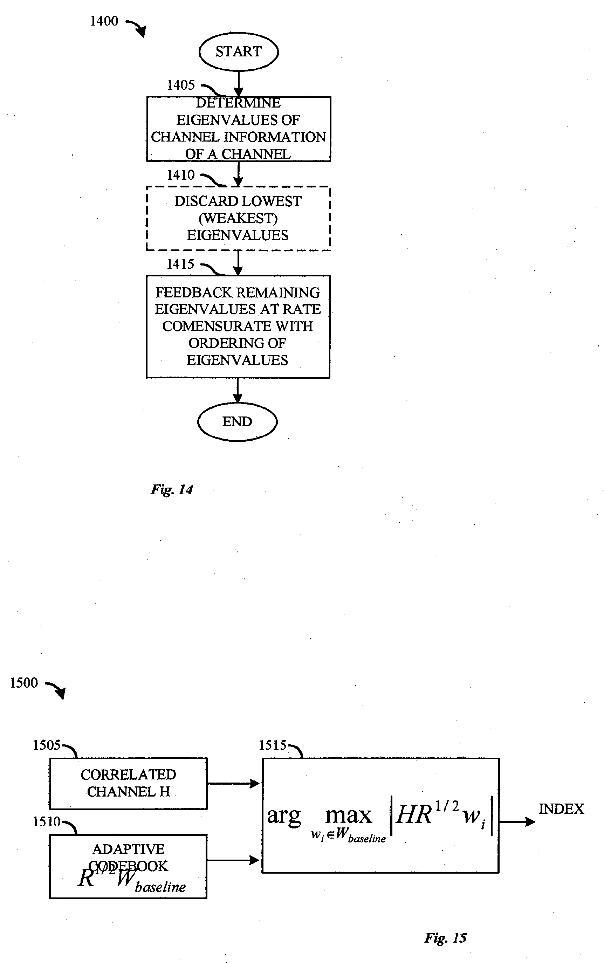

Figure 14 illustrates a flow diagram of communications device operations 1400 in providing CQI feedback. Communications device operations 1400 may be indicative of operations occurring in a communications device, such as a receiver, as the receiver determines channel information to be fedback to the transmitter to improve overall communications system performance. Communications device operations 1400 may occur while the communications device is in a normal operating mode.

Communications device operations 1400 may begin with the communications device determining eigenvalues of the channel information of the channel between the transmitter and the receiver (block 1405). According to an embodiment, singular value decomposition may be used to determine the eigenvalues. The communications device may optionally discard one or more of the weakest eigenvalues since the weakest eigenvalues may have very little impact on the quality of the channel information (block 1410).

The communications device may then feedback the eigenvalues back to the transmitter, with a period of the feedback information being dependent on an ordering of the eigenvalue (block 1415). For example, a first eigenvalue may be fedback at a first period, a second eigenvalue may be fedback at a second period, a third eigenvalue may be fedback at a third period, and so forth, where the first period is greater than or equal to the second period, the second period is greater than or equal to the third period, and so on. Communications device operations 1400 may then terminate.

Figure 15 illustrates a model 1500 of codebook quantization of channel information feedback at a UE, wherein the UE is receiving transmissions from an eNB. Model 1500 includes a channel to be quantized $H$ 1505 and an adaptive codebook $R^{1/2}W_{baseline}$ 1510. Adaptive codebook $R^{1/2}W_{baseline}$ 1510 may be based on a baseline codebook $W_{baseline}$, for example, adaptive codebook $R^{1/2}W_{baseline}$ 1510 may be a result of a multiplication of baseline codebook $W_{baseline}$ with a function of a channel correlation matrix (or some other long term channel information) $R$. A quantizer 1515 may have a transfer function expressible as $\arg \max_{w_i \in W_{baseline}} \left| HR^{1/2}w_i \right|$. An output of quantizer 1515 may be an index to a codeword $w_i$ in a baseline codebook $W_{baseline}$ that satisfies the transfer function of quantizer 335 and may be fedback to a transmitter.

At the eNB, in order to reconstruct the channel estimate of the channel to be quantized H 1505, the eNB may need an index to the baseline codebook $W_{baseline}$ and the long term channel information, such as the channel correlation matrix $R$, channel statistics, or so forth, used to adapt the baseline codebook $W_{baseline}$. Therefore, a UE should provide, as feedback information, the index to the baseline codebook $W_{baseline}$ and the long term channel information, such as the channel correlation matrix $R$, channel statistics, or so forth, to the eNB. The UE may utilize codebook quantization to reduce feedback information overhead. If codebook quantization is used, then it may be necessary to use multiple codebooks, one for the index and one for the long term channel information. Furthermore, if the long term channel information is in the form of a channel correlation matrix, then the UE may further reduce feedback information overhead by feeding back a reduced rank representation of the channel correlation matrix.

In essence, two components need to be digitized and synchronized between eNB and UE. First, the spatial channel statistics $R$ need be synchronized through feedback, for example. Synchronizing $R$ could be achieved via quantization using a statistics codebook $\Omega$. Second, the PMI index under the adapted baseline codebook $W_{baseline}$ need be synchronized through feedback, for example.

Codebook quantization may be applied using both time domain and/or frequency domain information. For example, if time domain statistics are used, then the channel correlation matrix $R$ contains time domain correlation, while if frequency domain statistics are used, then the channel correlation matrix $R$ contains frequency domain correlation.

According to an embodiment, a 4-bit short term codebook $W_{baseline}$ is selected to be the same as a Rel. 8 rank-1 codebook.

According to an embodiment, a 6-bit long term codebook $\Omega$ consists of 64 codewords. Among the 64 codewords, 16 codewords may be of the form

$$\begin{bmatrix} 1 & \rho_0 e^{j\theta_0} & \rho_0{}^2 e^{j2\theta_0} & \rho_0{}^3 e^{j3\theta_0} \\ \rho_0 e^{-j\theta_0} & 1 & \rho_0 e^{j\theta_0} & \rho_0{}^2 e^{j2\theta_0} \\ \rho_0{}^2 e^{-j2\theta_0} & \rho_0 e^{-j\theta_0} & 1 & \rho_0 e^{j\theta_0} \\ \rho_0{}^3 e^{-j3\theta_0} & \rho_0{}^2 e^{-j2\theta_0} & \rho_0 e^{-j\theta_0} & 1 \end{bmatrix}, \quad (1a)$$

where $\rho_0, \theta_0$ are chosen such that

$\rho_0 = 0.9$; and

$\theta_0$ is uniformly distributed within [-60, 60] degrees. (1b)

The form of the 16 codewords shown above is for a communications device having four transmit antennas. Similar formations are possible for other transmit antenna configurations and therefore, should not be construed as being limiting to the scope of the embodiments.

The Expressions (1a) and (1b) of the 6-bit long term codebook $\Omega$ may be specifically targeted for use with uniform linear array (ULA) transmit antenna configurations. With the 16 codewords having the form as shown above, the parameter $\theta_0$ may be selected from the list consisting of [-56.25, -48.75, -41.25, -33.75, -26.25, -18.75, -11.25, -3.75, 3.75, 11.25, 18.75, 26.25, 33.75, 41.25, 48.75, 56.25] degrees, thereby uniformly spanning the desired range [-60, 60].

The remaining 48 codewords of the 6-bit long term codebook $\Omega$ may take the form of

$$\begin{bmatrix} 1 & \rho_1 e^{j\theta_1} & \rho_2 e^{j(\theta_1+\theta_2)} & \rho_2 e^{j(2\theta_1+\theta_2)} \\ \rho_1 e^{-j\theta} & 1 & \rho_2 e^{j\theta_2} & \rho_2 e^{j(\theta_1+\theta_2)} \\ \rho_2 e^{-j(\theta_1+\theta_2)} & \rho_2 e^{-j\theta_2} & 1 & \rho_1 e^{j\theta_1} \\ \rho_2 e^{-j(2\theta_1+\theta_2)} & \rho_2 e^{-j(\theta_1+\theta_2)} & \rho_1 e^{-j\theta_1} & 1 \end{bmatrix}, \quad (2a)$$

where $\rho_1, \theta_1, \rho_2, \theta_2$ are chosen such that
$\rho_1 = 0.9$ ;
$\rho_2 = 0.4$ ;
$\theta_1$ is uniformly distributed within [-90, 90] degrees; and
$\theta_2$ is uniformly distributed within [-180, 180] degrees. (2b)

In Expression (2a) may be specifically targeted for use with dual polarized antenna arrays, where first and second antennas have a first polarization while third and fourth antennas have a second polarization. An example of dual polarized antenna arrays include cross polarized antennas (XPO). The parameter $\theta_1$ may be selected from the list consisting of [-82.5, -67.5, -52.5, -37.5, -22.5, -7.5, 7.5, 22.5, 37.5, 52.5, 67.5, 82.5] degrees spanning the desired range uniformly, and the parameter $\theta_2$ may be selected from the list consisting of [-135, -45, 45, 135] degrees spanning the desired range uniformly.

A possible different form of Expression (2a) may be

$$\begin{bmatrix} 1 & \rho_1 e^{j\theta_1} & \rho_1\rho_2 e^{j(\theta_1+\theta_2)} & \rho_1^2\rho_2 e^{j(2\theta_1+\theta_2)} \\ \rho_1 e^{-j\theta} & 1 & \rho_2 e^{j\theta_2} & \rho_1\rho_2 e^{j(\theta_1+\theta_2)} \\ \rho_1\rho_2 e^{-j(\theta_1+\theta_2)} & \rho_2 e^{-j\theta_2} & 1 & \rho_1 e^{j\theta_1} \\ \rho_1^2\rho_2 e^{-j(2\theta_1+\theta_2)} & \rho_1\rho_2 e^{-j(\theta_1+\theta_2)} & \rho_1 e^{-j\theta_1} & 1 \end{bmatrix}.$$

While a more general form of Expression (2a) may be

$$\begin{bmatrix} 1 & \alpha_1 e^{j\theta_1} & \alpha_2 e^{j(\theta_1+\theta_2)} & \alpha_4 e^{j(2\theta_1+\theta_2)} \\ \alpha_1 e^{-j\theta} & 1 & \alpha_3 e^{j\theta_2} & \alpha_5 e^{j(\theta_1+\theta_2)} \\ \alpha_2 e^{-j(\theta_1+\theta_2)} & \alpha_3 e^{-j\theta_2} & 1 & \alpha_6 e^{j\theta_1} \\ \alpha_4 e^{-j(2\theta_1+\theta_2)} & \alpha_5 e^{-j(\theta_1+\theta_2)} & \alpha_6 e^{-j\theta_1} & 1 \end{bmatrix},$$

where $\theta_1$, $\theta_2$, $\alpha_1$, $\alpha_2$, $\alpha_3$, $\alpha_4$, $\alpha_5$, $\alpha_6$ are independent variables.

An even more general form of Expression (2a) may be

$$\begin{bmatrix} 1 & \alpha_1 e^{jf(\theta_1)} & \alpha_2 e^{jg(\theta_1,\theta_2)} & \alpha_4 e^{jh(\theta_1,\theta_2)} \\ \alpha_1 e^{-jf(\theta_1)} & 1 & \alpha_3 e^{je(\theta_2)} & \alpha_5 e^{jg(\theta_1,\theta_2)} \\ \alpha_2 e^{-jg(\theta_1,\theta_2)} & \alpha_3 e^{-je(\theta_2)} & 1 & \alpha_6 e^{jf(\theta_1)} \\ \alpha_4 e^{-jh(\theta_1,\theta_2)} & \alpha_5 e^{-jg(\theta_1,\theta_2)} & \alpha_6 e^{-jf(\theta_1)} & 1 \end{bmatrix},$$

where e(.), f(.), g(.), h(.) are independent functions of variables $\theta_1$ and/or $\theta_2$. The form of the codewords shown above is for a communications device having four transmit antennas. Similar formations are possible for other transmit antenna configurations and therefore, should not be construed as being limiting to the scope of the embodiments.

Another form may be

$$\begin{bmatrix} e^{j\theta_1} & 0 & 0 & 0 \\ 0 & e^{j\theta_2} & 0 & 0 \\ 0 & 0 & e^{j\theta_3} & 0 \\ 0 & 0 & 0 & e^{j\theta_4} \end{bmatrix},$$

where $\theta_1$, $\theta_2$, $\theta_3$, $\theta_4$ are independent variables.

In general, combination codebook (e.g., the 6-bit long term codebook $\Omega$) may be used to quantize time domain channel statistics (for example, long term channel correlation or short term channel correlation). Additionally, the combination codebook may also be used to quantize frequency domain channel statistics (for example, wideband channel correlation or subband channel correlation).

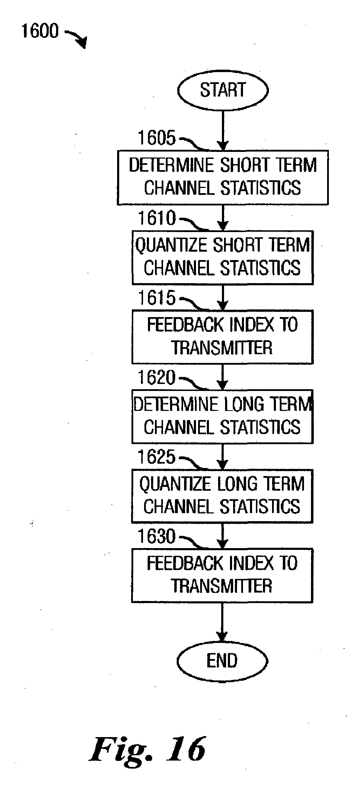

Figure 16 illustrates a flow diagram of communications device operations 1600 in providing channel information feedback. Communications device operations 1600 may be indicative of operations occurring in a communications device, such as a receiver, as the communications device provides both short term channel information and long term channel information to a transmitter to improve overall communications system performance. Communications device operations 1600 may occur while the communications device is in a normal operating mode.

Communications device operations 1600 may begin with the communications device determining short term channel statistics (block 1605). The communications device may then quantize the short term channel statistics (block 1610). According to an embodiment, the communications device may quantize the short term channel statistics using a codebook specifically intended for use in quantizing short term channel statistics. The communications device may then fedback an index corresponding to a codeword in the codebook used to quantize the short term channel statistics to the transmitter (block 1615).

Communications device operations 1600 may then determine long term channel statistics (block 1620). The communications device may then quantize the long term channel statistics (block 1625). According to an embodiment, the communications device may quantize the long term channel statistics using a codebook specifically intended for use in quantizing long term channel statistics. The communications device may then fedback an index corresponding to a codeword in the codebook used to quantize the long term channel statistics to the transmitter (block 1630). Communications device operations 1600 may then terminate.

According to an embodiment, the communications device may make use of a combination codebook that includes codewords specifically intended for quantizing short term channel statistics and codewords specifically intended for quantizing long term channel statistics. The combination codebook may be adaptations of a single baseline codebook, wherein different adaptations are used for different types of statistics. In addition to containing codewords specifically intended for quantizing different types of channel statistics, the combination codebook may contain codewords for use in quantizing different types channel information for communications devices with different antenna configurations, such as ULA, XPO, and so forth.

As discussed previously, the channel information and/or channel statistics need to be fedback to the transmitter by the receiver in order to improve overall performance. In 3GPP LTE compliant communications systems, the information may be fedback over a physical uplink control channel (PUCCH), which may be shared by multiple UE. Additionally, a strong error control coding may be applied to protect the information from errors that may arise during transmission. The error correction capability may be sufficient for the following reasons:

1. In 3GPP LTE Rel. 10, it is needed to transmit over the PUCCH channel an aggregation of up to 10 ACK/NAK bits, which are highly important. It is thus reasonable to assume that the error protection for 10 information bits would be strong enough in general. Given the same length for coded bits, the error protection for 6 information bits would be even stronger.

2. The adaptive codebook feature would be turned on mainly for users with medium to high SNR to enhance MU-MIMO average throughput. It is thus expected that the feedback link for those users are of good channel quality too. Under such circumstances, feedback error would not be a significant issue.

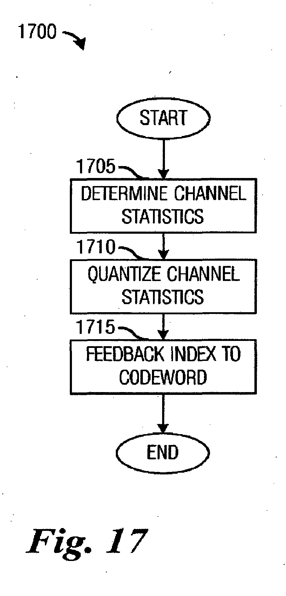

Figure 17 illustrates a flow diagram of communications device operations 1700 in feeding back channel information that may be used to improve overall communications system performance. Communications device operations 1700 may be indicative of operations occurring in a communications device, such as a receiver, as the communications device feeds back channel information to a transmitter. Communications device operations 1700 may occur while the communications device is in a normal operating mode.

Communications device operations 1700 may begin with the communications device determining channel information (block 1705). The communications device may then quantize the channel information (block 1710). The communications device may then feedback the quantized channel information to the transmitter (block 1715).

According to an embodiment, the communications device may feedback the quantized channel information to the transmitter over a PUCCH or some other control channel that may be used to feedback information to the transmitter. The communications device may apply an error correction code to the quantized channel information to provide protection from transmission errors (error corrected quantized channel information). The communications device may transmit the quantized channel information in a single transmission to minimize delay. Alternatively, if the channel condition is poor, the communications device may partition the quantized channel information into multiple parts, apply an error correction code to each part, and transmit each protected part in a separate transmission.

According to an alternative embodiment, the communications device may also add a CRC or a FEC to the quantized channel information to provide further protection from errors. According to yet another alternative embodiment, the communications device may repeat the transmission of the quantized channel information to help increase a likelihood that the quantized channel information arrives at the transmitter as intended.

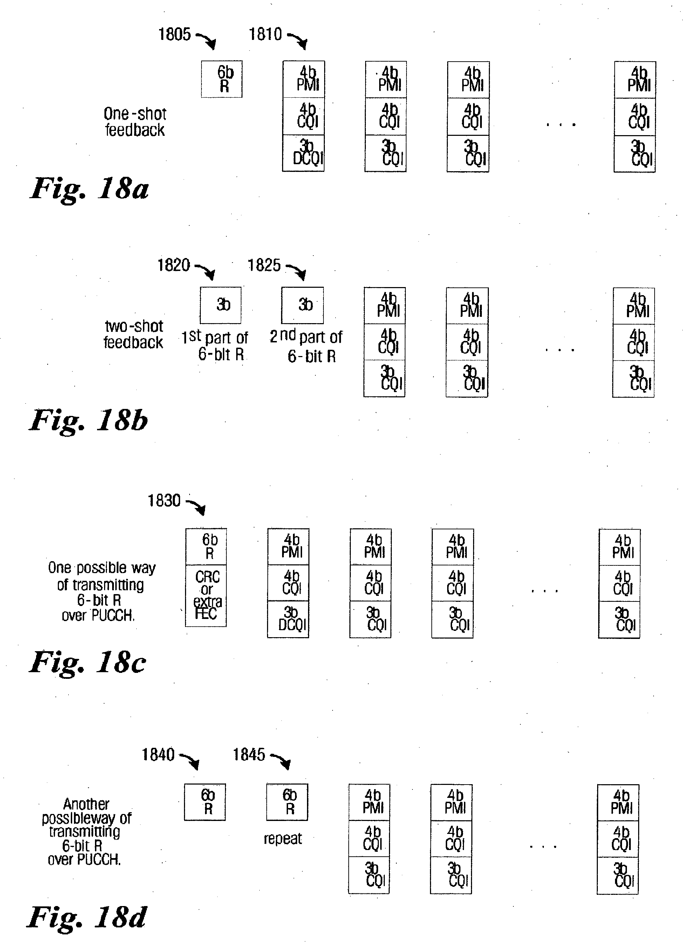

Figure 18a illustrates information carried on a PUCCH, including channel information and/or channel statistics, wherein the channel information and/or channel statistics are transmitted in a single transmission instance (or transmission opportunity). As shown in Figure 18a, at a transmission instance, either the channel information and/or channel statistics may be fedback (for example, transmission instance 1805) or PMI/CQI/DCQI information (also known as instantaneous information) may be fedback (for example, transmission instance 1810).

Figure 18b illustrates information carried on a PUCCH, including channel information and/or channel statistics, wherein a first portion of the channel information and/or channel statistics are transmitted in a first transmission instance and a second portion of the channel information and/or channel statistics are transmitted in a second transmission instance, wherein the first transmission instance is different from the second transmission instance. As shown in Figure 18b, rather than sending all of the channel information and/or channel statistics in a single transmission instance, the channel information and/or channel statistics may be partitioned into multiple parts and each part may be transmitted in a different transmission instance. Figure 18b illustrates an example where the channel information and/or channel statistics may be partitioned into two parts and transmitted in two different transmission instances (e.g., transmission instances 1820 and 1825).

Separately transmitting the parts of the channel information and/or channel statistics may allow for the use of stronger error correction codes. A benefit of using stronger error correction codes may be increased reliability.

Figure 18c illustrates information carried on a PUCCH, including channel information and/or channel statistics, wherein the channel information and/or channel statistics are transmitted in a single transmission instance 1830 along with a CRC or a forward error correction code (FEC). A 1-bit CRC may be appended to the 6-bit information bits before actual encoding according to the PUCCH format. Allowing for the detection of a feedback error be detected and corrected by the eNB. The FEC may not be a FEC inherent in the PUCCH. In essence, the channel information and/or channel statistics may be first encoded by the FEC and then the FEC inherent in the PUCCH.

Figure 18d illustrates information carried on a PUCCH, including channel information and/or channel statistics, wherein the channel information and/or channel statistics are repeated in a number of consecutive transmission instances. Instead of partitioning the channel information and/or channel statistics into multiple parts and transmitting each part in a different transmission instance, the channel information and/or channel statistics are transmitted in its entirety in a single transmission instance and then repeated in at least one other transmission instance (e.g., transmission instance 1840 is used to transmit the channel information and/or channel statistics for the first time and transmission instance 1845 is used to repeat the transmission of the channel information and/or channel statistics).

It may also be possible to provide the channel information and/or channel statistics using some form of implicit signaling. The channel covariance information may be derived from regular PMI feedback. Thus an explicit signaling of the long term channel covariance may not be absolutely necessary. It may be necessary for the eNB and the UE to update their version of the channel covariance in a synchronous manner however. Feedback error may not be a significant issue in implicit signaling because any feedback error may be applied with a small weight in calculating the overall long term channel information.

However, purely relying on implicit signaling to obtain the long term channel information may cause undesirable delay in case of low PMI feedback density. As a result, a hybrid solution may be pursued. One way of doing this is to reconstruct the long term channel correlation matrix at eNB and UE side as

$$R(n + T_R - \beta) = \alpha R(n) + (1 - \alpha) \sum_{i=n}^{n+T_R-\beta} \sum_{j=0}^{w} v^H(i, j) v(i, j),$$

where $R(n + T_R - \beta)$ represents the estimated/reconstructed channel correlation matrix at instant $n + T_R - \beta$, $R(n)$ represents the channel correlation matrix at instant n which may be obtained via a one-shot feedback over PUCCH, $T_R$ is the feedback periodicity of $R$, $\beta$ denotes a time instant between n and $n + T_R$, $v(i, j)$ is the codeword represented by PMI feedback in subband j, $\alpha$ is a forgetting factor.

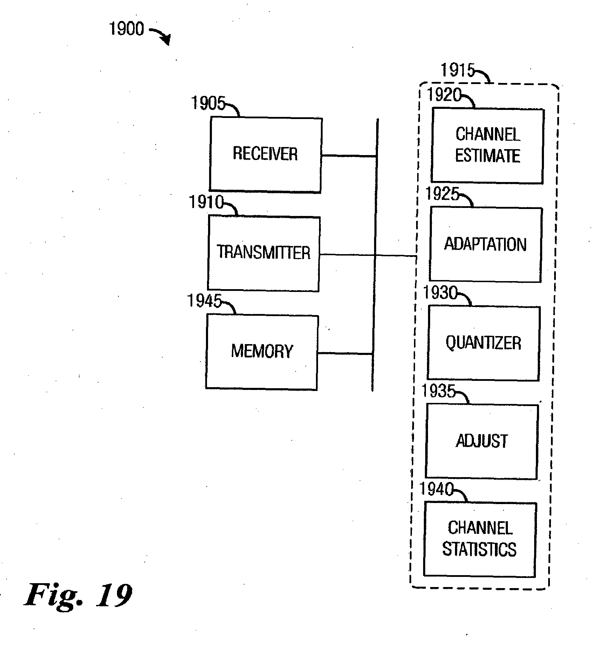

Figure 19 provides an alternate illustration of a communications device 1900. Communications device 1900 may be used to implement various ones of the embodiments discussed herein. As shown in Figure 19, a receiver 1905 is configured to receive information (such as quantized channel information, channel statistics, and pilot signals) and a transmitter 1910 is configured to transmit information (such as quantized channel information, channel statistics, and pilot signals).

A channel estimate unit 1920 is configured to make an estimate of a channel between communications device 1900 and another communications device based on a pilot signal transmitted by the other communications device. An adaptation unit 1925 is configured to adapt a baseline codebook based on channel information, channel statistics, and so on. A quantizer 1930 is configured to quantize channel information, channel statistics, and so forth, based on a codebook, an adapted codebook, multiple codebooks, etc.

An adjust unit 1935 is configured to make additional changes to a codebook, an adapted codebook, multiple codebooks, and so forth. For example, adjust unit 1935 may adjust an adapted codebook based on estimated channel statistics. A channel statistics unit 1940 is configured to determine channel statistics (long term channel statistics and/or short term channel statistics) based on estimates of the channel or information provided by another communications device. A memory 1945 may store the codebook, adapted codebook, channel estimates, channel statistics, and so on.

The elements of communications device 1900 may be implemented as specific hardware logic blocks. In an alternative, the elements of communications device 1900 may be implemented as software executing in a processor, controller, application specific integrated circuit, or so on. In yet another alternative, the elements of communications device 1900 may be implemented as a combination of software and/or hardware.

As an example, receiver 1905 and transmitter 1910 may be implemented as specific hardware blocks, while channel estimate unit 1920, adaptation unit 1925, quantizer 1930, adjust unit 1935, and channel statistics unit 1940 may be software modules executing in a processor 1915 or custom compiled logic arrays of a field programmable logic array.

Advantageous features of embodiments of the invention may include: a method for controller operations, the method comprising: receiving feedback information for a communications channel between a communications device and the controller, wherein the feedback information comprises an indicator of a spatial channel matrix out of a spatial channel matrix codebook and a reduced rank representation of selected statistics of the communications channel; adapting a local spatial channel matrix codebook using the reduced rank representation of selected statistics of the communications channel; adjusting a transmitter of the controller using the indicator and the adapted local spatial matrix codebook; and transmitting a transmission to the communications device, wherein the transmission is precoded using a precoding matrix, and wherein the precoding matrix is selected based on the indicator. The method could further include, wherein the precoding matrix is a local precoding matrix from the adapted local spatial channel matrix codebook indicated by the indicator. The method could further include, wherein the precoding matrix is a local precoding matrix derived from a representation of the communications channel indicated by the indicator. The method could further include, wherein the reduced rank representation of selected statistics of the communications channel is also used to adapt a spatial channel matrix codebook at the communications device. The method could further include, wherein the controller serves a plurality of communications devices, and wherein the controller communicates using multi-user multiple input, multiple output (MU-MIMO). The method could further include, wherein the controller maintains an adapted codebook for each communications device in the plurality of communications devices. The method could further include, wherein receiving feedback information comprises receiving feedback information from each communications device. The method could further include, wherein there are a plurality of controllers and a plurality of communications devices, and wherein each controller communicates using multi-cell multiple input, multiple output (MC-MIMO). The method could further include, wherein each controller maintains an adapted codebook for each communications device that it serves as well as each communications device that it interferes with. The method could further include, wherein receiving feedback information comprises for each controller, receiving feedback information from each communications device served by the controller and each communications device that the controller interferes with.

Advantageous features of embodiments of the invention may include: a method for communications node operations, the method comprising: estimating a communications channel between the communications node and a controller serving the communications node; quantizing the estimated communications channel based on an adapted codebook; transmitting an indicator of the quantized estimated communications channel; estimating statistics of the communications channel; adjusting the adapted codebook based on the estimated statistics; transmitting a reduced rank representation of the statistics to the controller; and receiving a transmission from the controller, wherein the transmission is precoded based on the indicator of the quantized estimated communications channel and the reduced rank representation of the statistics. The method could further include, wherein the estimating a communications channel and the estimating statistics occur at different frequencies. The method could further include, wherein the reduced rank representation of the statistics is used to adjust an adapted codebook at the controller.

Advantageous features of embodiments of the invention may include: a method for controller operations, the method comprising: receiving feedback information for a communications channel between a communications device and the controller, wherein the feedback information comprises a first indicator of a precoding matrix in a first codebook and a second indicator related to statistics of the communications channel in a second codebook; adapting the first codebook using statistics of the communications channel based on the second indicator; adjusting a transmitter of the controller using the first indicator and the adapted first codebook; and transmitting a transmission to the communications device, wherein the transmission is precoded using the precoding matrix, and wherein the precoding matrix is selected based on the first indicator and the adapted first codebook. The method could further include, wherein the first indicator and the second indicator are received at different frequencies. The method could further include, wherein the second indicator comprises an index to a matrix of a plurality of matrices in the second codebook. The method could further include, wherein the second indicator comprises a plurality of indices to values in a matrix in the second codebook, wherein each index corresponds to a value in a statistics matrix. The method could further include, wherein the controller serves a plurality of communications devices, wherein the controller communicates using multi-user multiple input, multiple output (MU-MIMO), and wherein receiving feedback information comprises receiving feedback information from each communications device. The method could further include, wherein there are a plurality of controllers and a plurality of communications devices, wherein the controller communicates using multi-cell multiple input, multiple output (MC-MIMO), and wherein receiving feedback information comprises for each controller, receiving feedback information from each communications device served by the controller and each communications device that the controller interferes with. The method could further include, wherein the second indicator comprises a statistics indicator of the statistics of the communications channel. The method could further include, wherein the second indicator comprises a statistics indicator of a function of the statistics of the communications channel. The method could further include, wherein the statistics indicator comprises a complete indicator of the statistics of the communications channel. The method could further include, wherein the statistics indicator comprises a partial indicator of a subset of the statistics of the communications channel. The method could further include, wherein the partial indicator comprises a subset of eigenvectors and/or a subset of eigenvalues of the statistics of the communications channel.

Advantageous features of embodiments of the invention may include: a method of communications node operations, the method comprising: estimating a communications channel between the communications node and a controller serving the communications node; quantizing the estimated communications channel based on an adapted codebook; estimating statistics of the communications channel; transmitting a first indicator of the quantized estimated communications channel and a second indicator of a function of the estimated statistics of the communications channel; adjusting the adapted codebook based on the estimated statistics; and receiving a transmission from the controller, wherein the transmission is precoded based on the first indicator of the quantized estimated communications channel and the second indicator of the function of the estimated statistics.

Advantageous features of embodiments of the invention may include: a method for controller operations, the method comprising: receiving feedback information for a communications channel between a communications device and the controller, wherein the feedback information comprises a first indicator of a precoding matrix in a first codebook; estimating a function of statistics of the communications channel; adapting the first codebook using the function of statistics of the communications channel; signaling a second indicator related to the function of statistics of the communications channel in a second codebook to the communications device; adjusting a transmitter of the controller using the first indicator and the adapted codebook; and transmitting a transmission to the communications device, wherein the transmission is precoded using the precoding matrix, and wherein the precoding matrix is based on the first indicator and the adapted first codebook. The method could further include, wherein estimating the function of statistics is based on precoding matrix information, channel quality indicators, and rank indicators provided by the communications device. The method could further include, wherein estimating the function of statistics comprises evaluating

$$\hat{\mathbf{R}}_{dl} = \sum_i \sum_{k=1}^{r_i} \mathrm{CQI}_{i,k} \cdot \mathrm{PMI}_{i,k} \cdot \mathrm{PMI}_{i,k}^{\mathcal{H}},$$

where $CQI_{i,k}$ is the $k$-th channel quality indicator value in time instant $i$, $r_i$ is the maximum number of channel quality indicators in time instant $i$, $PMI_{i,k}$ is the component of the precoding matrix that corresponds to $CQI_{i,k}$. The method could further include, wherein estimating the function of statistics comprises evaluating

$$\hat{\mathbf{R}}_{dl} = \sum_i \sum_{k=1}^{r_i} \frac{\mathrm{CQI}_{i,k}}{\mathrm{CQI}_{i,r_i}} \cdot \mathrm{PMI}_{i,k} \cdot \mathrm{PMI}_{i,k}^{\mathcal{H}},$$

where $CQI_{i,k}$ is the $k$-th channel quality indicator value in time instant $i$, $r_i$ is the maximum number of channel quality indicators in time instant $i$, $PMI_{i,k}$ is the component of the precoding matrix that corresponds to $CQI_{i,k}$. The method could further include, wherein estimating the function of statistics is based on precoding matrix information provided by the communications device and eigenvalue reciprocity. The method could further include, wherein estimating the function of statistics comprises evaluating

$$\hat{R}_{dl} = \sum_i \sum_{k=1}^{r_i} f(\sigma_{ul,i,k}^2) \cdot PMI_{i,k} \cdot PMI_{i,k}^H,$$

where $\sigma_{ul,i,k}^2$ is the k-th eigenvalue of the uplink channel in time instant $i$, $f(.)$ is the function that is necessary to transform uplink eigenvalues to downlink eigenvalues, $r_i$ is the rank indicator in time instant $i$, and $PMI_{i,k}$ is the $k$-th column of the precoding matrix in time instant $i$. The method could further include, wherein estimating the function of statistics comprises evaluating

$$\hat{R}_{dl} = \sum_i \sum_{k=1}^{r_i} \frac{f(\sigma_{ul,i,k}^2)}{f(\sigma_{ul,i,r_i}^2)} \cdot PMI_{i,k} \cdot PMI_{i,k}^H \,,$$

where $\sigma_{ul,i,k}^2$ is the k-th eigenvalue of the uplink channel in time instant $i, f(.)$ is the function that is necessary to transform uplink eigenvalues to downlink eigenvalues, $r_i$ is the rank indicator in time instant $i$, and $PMI_{i,k}$ is the $k$-th column of the precoding matrix in time instant $i$.

Advantageous features of embodiments of the invention may include: a method of communications node operations, the method comprising: estimating a communications channel between the communications node and a controller serving the communications node; quantizing the estimated communications channel based on an adapted codebook; transmitting an indicator of the quantized estimated communications channel; receiving a statistics indicator related to a function of statistics of the communications channel, wherein the statistics indicator is for a statistics codebook; adjusting the adapted codebook based on the statistics indicator; and receiving a transmission from the controller, wherein the transmission is precoded based on the indicator of the quantized estimated communications channel.

Advantageous features of embodiments of the invention may include: a method for controller operations, the method comprising: receiving feedback information for a communications channel between a communications device and the controller, wherein the feedback information comprises a first indicator of a precoding matrix in a first codebook; estimating a function of statistics of the communications channel; adapting the first codebook using the function of statistics of the communications channel; adjusting a transmitter of the controller using the first indicator and the adapted codebook; and transmitting a transmission to the communications device, wherein the transmission is precoded using the precoding matrix, and wherein the precoding matrix is based on the first indicator and the adapted first codebook. The method could further include, further comprising receiving a component of the function of statistics from the communications device. The method could further include, wherein the component comprises a set of eigenvectors. The method could further include, wherein the component comprises a set of eigenvalues. The method could further include, further comprising transmitting a component of the function of statistics to the communications device. The method could further include, wherein transmitting a component further comprises transmitting a eigenvalue reciprocity information. The method could further include, wherein estimating the function of statistics is based on precoding matrix information, channel quality indicators, and rank indicators provided by the communications device. The method could further include, wherein estimating the function of statistics comprises evaluating

$$\hat{R}_{dl} = \sum_i \sum_{k=1}^{r_i} CQI_{i,k} \cdot PMI_{i,k} \cdot PMI_{i,k}^{\mathcal{H}} \,,$$

where $CQI_{i,k}$ is the $k$-th channel quality indicator value in time instant $i$, $r_i$ is the maximum number of channel quality indicators in time instant $i$, $PMI_{i,k}$ is the component of the precoding matrix that corresponds to $COI_{i,k}$. The method could further include, wherein estimating the function of statistics comprises evaluating

$$\hat{R}_{dl} = \sum_i \sum_{k=1}^{r_i} \frac{CQI_{i,k}}{CQI_{i,r_i}} \cdot PMI_{i,k} \cdot PMI_{i,k}^{\mathcal{H}} \,,$$

where $CQI_{i,k}$ is the $k$-th channel quality indicator value in time instant $i$, $r_i$ is the maximum number of channel quality indicators in time instant $i$, $PMI_{i,k}$ is the component of the precoding matrix that corresponds to $CQI_{i,k}$. The method could further include, wherein estimating the function of statistics is based on precoding matrix information provided by the communications device and eigenvalue reciprocity. The method could further include, wherein estimating the function of statistics comprises evaluating

$$\hat{R}_{dl} = \sum_i \sum_{k=1}^{r_i} f(\sigma_{ul,i,k}^2) \cdot PMI_{i,k} \cdot PMI_{i,k}^H \,,$$

where $\sigma_{ul,i,k}^2$ is the $k$-th eigenvalue of the uplink channel in time instant $i, f(.)$ is the function that is necessary to transform uplink eigenvalues to downlink eigenvalues, $r_i$ is the rank indicator in time instant $i$, and $PMI_{i,k}$ is the $k$-th column of the precoding matrix in time instant $i$. The method could further include, wherein estimating the function of statistics comprises evaluating

$$\hat{R}_{dl} = \sum_{i} \sum_{k=1}^{r_i} \frac{f(\sigma_{ul,i,k}^2)}{f(\sigma_{ul,i,r_i}^2)} \cdot PMI_{i,k} \cdot PMI_{i,k}^H \,,$$

where $\sigma_{ul,i,k}^2$ is the $k$-th eigenvalue of the uplink channel in time instant $i$, $f(.)$ is the function that is necessary to transform uplink eigenvalues to downlink eigenvalues, $r_i$ is the rank indicator in time instant $i$, and $PMI_{i,k}$ is the $k$-th column of the precoding matrix in time instant $i$.

Advantageous features of embodiments of the invention may include: a method of communications node operations, the method comprising: estimating a communications channel between the communications node and a controller serving the communications node; quantizing the estimated communications channel based on an adapted codebook; transmitting an indicator of the quantized estimated communications channel; estimating statistics of the communications channel; adjusting the adapted codebook based on the estimated statistics; and receiving a transmission from the controller, wherein the transmission is precoded based on the indicator of the quantized estimated communications channel. The method could further include, further comprising receiving a component of the function of statistics from the controller. The method could further include, further comprising transmitting a component of the function of statistics to the controller.

Although the present invention and its advantages have been described in detail, it should be understood that various changes, substitutions and alterations can be made herein without departing from the spirit and scope of the invention as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for communications node operations, the method comprising:

   estimating a communications channel (315, 415, 515, 615) between the communications node (310, 410, 510, 610) and a controller (305, 405, 505, 605) serving the communications node (310, 410, 510, 610);
   quantizing the estimated communications channel (315, 415, 515, 615) based on an adapted codebook (320, 325, 420, 425, 520, 525, 620, 625);
   transmitting a first indicator of the quantized estimated communications channel (315, 415, 515, 615) from the communications node (310, 410, 510, 610) to the controller (305, 405, 505, 605);
   adjusting the adapted codebook (320, 325, 420, 425, 520, 525, 620, 625) based on statistics of the communication channel (315, 415, 515, 615); and
   receiving a transmission from the controller (305, 405, 505, 605), wherein the transmission is precoded based on the first indicator of the quantized estimated communications channel (315, 415, 515, 615),

   **characterized in that**
   the method further comprises receiving a component of a function of the statistics of the communications channel (315, 415, 515, 615) from the controller (305, 405, 505, 605).

2. The method of claim 1, wherein statistics of the communication channel (315, 415, 515, 615) is estimated by the communication node (310, 410, 510, 610).

3. The method of claim 1, wherein statistics of the communication channel (315, 415, 515, 615) is received from a controller.

4. The method of claim 1 or 2, further comprising transmitting a second indicator of a function of estimated statistics of the communications channel (315, 415, 515, 615), and wherein the transmission is precoded based on the second indicator of the function of the estimated statistics, and wherein transmitting a second indicator comprises transmitting a reduced rank representation of the estimated statistics.

5. The method of claim 4, wherein the estimating a communications channel (315, 415, 515, 615) and the estimating statistics occur at different frequencies, and the reduced rank representation of the statistics is used to adjust an adapted codebook (325, 425, 525, 625) at the controller.

**Patentansprüche**

1. Verfahren zum Betreiben eines Kommunikationsknotens, wobei das Verfahren Folgendes umfasst:

Schätzen eines Kommunikationskanals (315, 415, 515, 615) zwischen dem Kommunikationsknoten (310, 410, 510, 610) und einer Steuereinheit (305, 405, 505, 605), die den Kommunikationsknoten (310, 410, 510, 610) bedient;
Quantisieren des geschätzten Kommunikationskanals (315, 415, 515, 615) basierend auf einem geeigneten Codebuch (320, 325, 420, 425, 520, 525, 620, 625);
Übertragen eines ersten Kennzeichens des quantisierten geschätzten Kommunikationskanals (315, 415, 515, 615) von dem Kommunikationsknoten (310, 410, 510, 610) zu der Steuereinheit (305, 405, 505, 605);
Anpassen des geeigneten Codebuchs (320, 325, 420, 425, 520, 525, 620, 625) basierend auf einer Statistik des Kommunikationskanals (315, 415, 515, 615); und
Empfangen einer Übertragung von der Steuereinheit (305, 405, 505, 605), wobei die Übertragung basierend auf dem ersten Kennzeichen des quantisierten geschätzten Kommunikationskanals (315, 415, 515, 615) vorcodiert ist,
**dadurch gekennzeichnet, dass**
das Verfahren ferner Empfangen einer Komponente einer Funktion der Statistik des Kommunikationskanals (315, 415, 515, 615) von der Steuereinheit (305, 405, 505, 605) umfasst.

2. Verfahren nach Anspruch 1, wobei die Statistik des Kommunikationskanals (315, 415, 515, 615) durch den Kommunikationsknoten (310, 410, 510, 610) geschätzt wird.

3. Verfahren nach Anspruch 1, wobei die Statistik des Kommunikationskanals (315, 415, 515, 615) von einer Steuereinheit empfangen wird.

4. Verfahren nach Anspruch 1 oder 2, das ferner das Übertragen eines zweiten Kennzeichens einer Funktion der geschätzten Statistik des Kommunikationskanals (315, 415, 515, 615) umfasst und wobei die Übertragung basierend auf dem zweiten Kennzeichen der Funktion der geschätzten Statistik vorcodiert ist und wobei Übertragen eines zweiten Kennzeichens Übertragen einer reduzierten Rangdarstellung der geschätzten Statistik umfasst.

5. Verfahren nach Anspruch 4, wobei das Schätzen eines Kommunikationskanals (315, 415, 515, 615) und das Schätzen der Statistik mit unterschiedlichen Häufigkeiten auftreten und die reduzierte Rangdarstellung der Statistik verwendet wird, um ein geeignetes Codebuch (325, 425, 525, 625) in der Steuereinheit anzupassen.

**Revendications**

1. Procédé pour des opérations d'un noeud de communication, comprenant les étapes suivantes :

estimer un canal de communication (315, 415, 515, 615) entre le noeud de communication (310, 410, 510, 610) et un contrôleur (305, 405, 505, 605) servant le noeud de communication (310, 410, 510, 610) ;
quantifier le canal de communication estimé (315, 415, 515, 615) selon un livre de codes adapté (320, 325, 420, 425, 520, 525, 620, 625) ;
transmettre un premier indicateur du canal de communication estimé quantifié (315, 415, 515, 615) à partir du noeud de communication (310, 410, 510, 610) au contrôleur (305, 405,505,605);
ajuster le livre de codes adapté (320, 325, 420, 425, 520, 525, 620, 625) en fonction de statistiques du canal de communication (315, 415, 515, 615) ; et
recevoir une transmission à partir du contrôleur (305, 405, 505, 605), la transmission étant précodée en fonction du premier indicateur du canal de communication estimé quantifié (315, 415, 515, 615),

**caractérisé en ce que**

le procédé consiste en outre à recevoir un composant d'une fonction des statistiques du canal de communication (315, 415, 515, 615) à partir du contrôleur (305, 405, 505, 605).

2. Procédé selon la revendication 1, dans lequel les statistiques du canal de communication (315, 415, 515, 615) sont estimées par le noeud de communication (310, 410, 510, 610).

3. Procédé selon la revendication 1, dans lequel les statistiques du canal de communication (315, 415, 515, 615) sont reçues à partir d'un contrôleur.

4. Procédé selon la revendication 1 ou 2, comprenant en outre :

transmettre un deuxième indicateur d'une fonction des statistiques estimées du canal de communication (315, 415, 515, 615), la transmission étant précodée selon le deuxième indicateur de la fonction des statistiques estimées, et l'étape consistant à transmettre un deuxième indicateur comprenant : transmettre une représentation de rang réduite des statistiques estimées.

5. Procédé selon la revendication 4, dans lequel l'étape consistant à estimer un canal de communication (315, 415, 515, 615) et l'étape consistant à estimer les statistiques se produisent à différentes fréquences, et la représentation de rang réduite des statistiques est utilisée pour ajuster un livre de codes adapté (325, 425, 525, 625) au niveau du contrôleur.

100

105 — TRANSMITTER

115 — CHANNEL

110 — RECEIVER

120 — FEEDBACK CHANNEL

*FIG. 1*
*(PRIOR ART)*

200

205 — TRANSMITTER

215 — CHANNEL

210 — RECEIVER

CODEBOOK LOOKUP

CODEBOOK LOOKUP

225 — BASELINE CODEBOOK

PMI FEEDBACK

220 — BASELINE CODEBOOK

*FIG. 2*

300

305 — TRANSMITTER

315 — CHANNEL

310 — RECEIVER

CODEBOOK LOOKUP

CODEBOOK LOOKUP

325 — ADAPTED CODEBOOK

PMI FEEDBACK

R FEEDBACK

320 — ADAPTED CODEBOOK

*FIG. 3*

400

405
TRANSMITTER

415
CHANNEL

410
RECEIVER

CODEBOOK LOOKUP

CODEBOOK LOOKUP

425
ADAPTED CODEBOOK

PMI FEEDBACK

EXPLICIT OR IMPLICIT R

420
BASELINE CODEBOOK

**Fig. 4**

500

505
TRANSMITTER

515
CHANNEL

510
RECEIVER

CODEBOOK LOOKUP

CODEBOOK LOOKUP

525
ADAPTED CODEBOOK

PMI FEEDBACK

520
ADAPTED CODEBOOK

**Fig. 5**

600

605
TRANSMITTER

615
CHANNEL

610
RECEIVER

CODEBOOK LOOKUP

CODEBOOK LOOKUP

625
ADAPTED CODEBOOK

PMI FEEDBACK

A REDUCED RANK REPRESENTATION OF R

620
ADAPTED CODEBOOK

**Fig. 6**

Fig. 7

Fig. 8

900

905

TRANSMITTER

915
CHANNEL

910

RECEIVER

CODEBOOK LOOKUP

925

ADAPTED
PMI
CODEBOOK

PMI
FEEDBACK

CODEBOOK LOOKUP

920

ADAPTED
PMI
CODEBOOK

CODEBOOK ADAPTATION

935

C
CODEBOOK

DIFF. FREQUENCY

C
SIGNALLING

CODEBOOK ADAPTATION

930

C
CODEBOOK

*Fig. 9*

1000

1005

TRANSMITTER

1015
CHANNEL

1010

RECEIVER

CODEBOOK LOOKUP

1025

ADAPTED
PMI
CODEBOOK

PMI
FEEDBACK

CODEBOOK LOOKUP

1020

ADAPTED
PMI
CODEBOOK

CODEBOOK ADAPTATION

1035

C
CODEBOOK
1

DIFF. FREQUENCY

C
SIGNALLING / FEEDBACK

CODEBOOK ADAPTATION

1030

C
CODEBOOK
2

*Fig. 10*

**Fig. 11**

1200

START

1205 — RECEIVE SPATIAL AUTO-CORRELATION FEEDBACK INFORMATION

1210 — GENERATE CODEWORD

1215 — NORMALIZE COMPONENT VECTORS

1220 — MORE CODEWORDS TO GENERATE? | Y

N

END

**Fig. 12**

1300

START

1305 — EXPRESS CODEWORD OF RANK-N BASELINE CODEBOOK AS $N_{TX1}$ UNIT NORM VECTORS

1310 — TRANSFORM EACH $N_{TX1}$ UNIT NORM VECTOR WITH CHANNEL CORRELATION MATRIX

1315 — APPLY ORTHONORMALIZATION

END

**Fig. 13**

1400

START

1405

DETERMINE
EIGENVALUES OF
CHANNEL INFORMATION
OF A CHANNEL

1410

DISCARD LOWEST
(WEAKEST)
EIGENVALUES

1415

FEEDBACK REMAINING
EIGENVALUES AT RATE
COMENSURATE WITH
ORDERING OF
EIGENVALUES

END

*Fig. 14*

1500

1505

CORRELATED
CHANNEL H

1510

ADAPTIVE
CODEBOOK
$R^{1/2}W_{baseline}$

1515

$$\arg \max_{w_i \in W_{baseline}} \left| HR^{1/2} w_i \right|$$

INDEX

*Fig. 15*

1600

START

1605 — DETERMINE SHORT TERM
CHANNEL STATISTICS

1610 — QUANTIZE SHORT TERM
CHANNEL STATISTICS

1615 — FEEDBACK INDEX TO
TRANSMITTER

1620 — DETERMINE LONG TERM
CHANNEL STATISTICS

1625 — QUANTIZE LONG TERM
CHANNEL STATISTICS

1630 — FEEDBACK INDEX TO
TRANSMITTER

END

*Fig. 16*

1700

START

1705

DETERMINE CHANNEL
STATISTICS

1710

QUANTIZE CHANNEL
STATISTICS

1715

FEEDBACK INDEX TO
CODEWORD

END

*Fig. 17*

1805 ⌐  1810 ⌐

One-shot
feedback

| 6b R |

| 4b PMI |
| 4b CQI |
| 3b DCQI |

| 4b PMI |
| 4b CQI |
| 3b CQI |

| 4b PMI |
| 4b CQI |
| 3b CQI |

. . .

| 4b PMI |
| 4b CQI |
| 3b CQI |

*Fig. 18a*

1820 ⌐  1825 ⌐

two-shot
feedback

1st part of 6-bit R

| 3b |

2nd part of 6-bit R

| 3b |

| 4b PMI |
| 4b CQI |
| 3b CQI |

| 4b PMI |
| 4b CQI |
| 3b CQI |

. . .

| 4b PMI |
| 4b CQI |
| 3b CQI |

*Fig. 18b*

1830 ⌐

One possible way
of transmitting
6-bit R
over PUCCH.

| 6b R |
| CRC or extra FEC |

| 4b PMI |
| 4b CQI |
| 3b DCQI |

| 4b PMI |
| 4b CQI |
| 3b CQI |

| 4b PMI |
| 4b CQI |
| 3b CQI |

. . .

| 4b PMI |
| 4b CQI |
| 3b CQI |

*Fig. 18c*

1840 ⌐  1845 ⌐

Another
possibleway of
transmitting
6-bit R
over PUCCH.

| 6b R |

| 6b R |

repeat

| 4b PMI |
| 4b CQI |
| 3b CQI |

| 4b PMI |
| 4b CQI |
| 3b CQI |

. . .

| 4b PMI |
| 4b CQI |
| 3b CQI |

*Fig. 18d*

1900

1915

1905

RECEIVER

1910

TRANSMITTER

1945

MEMORY

1920

CHANNEL
ESTIMATE

1925

ADAPTATION

1930

QUANTIZER

1935

ADJUST

1940

CHANNEL
STATISTICS

*Fig. 19*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1944883 A2

**Non-patent literature cited in the description**

• Adaptive Codebook Designs for DL MIMO. *3GPP Draft, mobile competence center*